# EUROPEAN PATENT APPLICATION

(11) **EP 4 827 156 A1**
(43) Date of publication of application: **21.10.2026**
(21) Application number: 24905852.0
(22) Date of filing: 30.10.2024
(51) Int. Cl.: H04W 24/04

(54) **COMMUNICATION METHOD AND COMMUNICATION APPARATUS**

(30) Priority: 22.12.2023 CN 202311795262
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN)
(74) Representative: Huawei European IPR
(86) International application number: PCT/CN2024/128366
(87) International publication number: WO 2025/130364

(57) **Abstract**

This application provides a communication method, comprising: a donor access network device or a relay device determining that a camping cell of the relay device is outside a service area of a first network slice, wherein the first network slice is associated with a first PDU session established by the relay device, a DRB corresponding to the first PDU session is configured to carry data of a backhaul link, and the backhaul link is a backhaul link for transmitting data of a second PDU session of a first terminal device that accesses the relay device. The donor access network device or relay device instructs, through first indication information, a first core network device serving the first terminal device to deactivate the second PDU session. This can avoid service failure or interruption caused by the first terminal device continuing to perform service transmission based on the second PDU session.

## Description

This application claims priority to Chinese Patent Application No. 202311795262.7, filed with the China National Intellectual Property Administration on December 22, 2023, with the title "Communication Method and Communication Apparatus," the entire content of which is incorporated herein by reference.

### TECHNICAL FIELD

Embodiments of this application relate to the field of communications technologies, and more specifically, to a communication method and a communication apparatus.

### BACKGROUND

With the development of mobile communications technologies, various new services and application scenarios continue to emerge. These services have vastly different requirements regarding network functions, connection performance, security, and other aspects. If a single network is used to carry all these services, it would be difficult to simultaneously satisfy requirements such as high bandwidth, low latency, and high reliability. In addition, building a separate dedicated network for each service would incur enormous costs. This requires the fifth generation (5G) communications system to be flexible and scalable while being capable of meeting different service requirements. To this end, the 5G communications system provides users with customized network services through end-to-end network slicing.

In addition, a layer 3 (layer 3, L3) relay system includes a relay device. The relay device includes a relay terminal device part and a relay network device part. Data on the data plane or user plane of a first terminal device that accesses the relay network device part is backhauled through a data radio bearer (data radio bearer, DRB) established between the relay terminal device part and a donor base station.

However, when the service area of the network slice associated with the DRB established by the relay device for carrying backhaul link data for the first terminal device does not include the camping cell of the relay device, a request initiated by the relay device in the camping cell to establish a protocol data unit (protocol data unit, PDU) session associated with that network slice will fail, or even if a PDU session associated with that network slice exists, the data plane of that PDU session will not be activated and the corresponding already-established DRB will be released. As a result, the relay device cannot continue to provide backhaul services for the terminal device through the DRB corresponding to the PDU session associated with that network slice in that camping cell, which may lead to failure of service requests by the terminal device or interruption of already-established services.

### SUMMARY

This application provides a communication method, with the aim of avoiding failure of service requests by a terminal device or interruption of already-established services.

In a first aspect, a communication method is provided. The method may be performed by a donor access network device or a relay device, or may be performed by a component (e.g., a chip, a circuit, or a chip system) of the donor access network device or the relay device. This application does not limit the foregoing.

The communication method comprises: determining that a first cell is outside a service area of a first network slice, wherein the first cell is a camping cell of a relay device, the first network slice is associated with a first protocol data unit (PDU) session established by the relay device, a data radio bearer (DRB) corresponding to the first PDU session is used for carrying data of a backhaul link, the backhaul link is a backhaul link for transmitting data of a second PDU session of a first terminal device, and the first terminal device is a terminal device that accesses the relay device; sending first indication information, wherein the first indication information is used to instruct a first core network device to deactivate the second PDU session, and the first core network device serves the first terminal device.

Based on the above technical solution, taking the donor access network device or the relay device as the performing entity as an example, the donor access network device or the relay device may determine that the current camping cell of the relay device is outside the service area of the first network slice, and the DRB corresponding to the first PDU session associated with that first network slice established by the relay device can no longer be used for carrying data of the backhaul link, wherein the backhaul link is the backhaul link for transmitting data of the second PDU session. Therefore, the donor access network device or the relay device may, through the first indication information, instruct the first core network device serving the first terminal device to deactivate the second PDU session, thereby avoiding service failure or interruption caused by the first terminal device continuing to perform service transmission based on the second PDU session.

With reference to the first aspect, in certain implementations of the first aspect, the determining that the first cell is outside the service area of the first network slice comprises: determining that the first cell does not include resources allocated for the first network slice; or determining, based on the identifier of the first cell and identifiers of at least one cell included in first service area information, that the identifier of the first cell does not belong to any of the identifiers of the at least one cell, wherein the first service area information is information provided by a second core network device serving the relay device to indicate the service area of the first network slice; or determining that the first PDU session has been deactivated.

Based on the above technical solution, the first cell being outside the service area of the first network slice may be determined in different ways, thereby improving solution flexibility. For example, if the device that determines the first cell is outside the service area of the first network slice is the donor access network device, then when the donor access network device determines that the first cell does not include resources allocated for the first network slice, the donor access network device considers that the first cell is outside the service area of the first network slice. As another example, if the device that determines the first cell is outside the service area of the first network slice is the relay device, the relay device may determine, based on the identifier of the first cell and the first service area information of the first network slice, that the identifier of the first cell does not belong to any of the identifiers of at least one cell, wherein the first service area information includes identifiers of at least one cell included in the service area of the first network slice. As yet another example, if the device that determines the first cell is outside the service area of the first network slice is the relay device, when the relay device perceives that the first PDU session has been deactivated, it considers that the first cell is outside the service area of the first network slice.

With reference to the first aspect, in certain implementations of the first aspect, the sending the first indication information comprises: sending the first indication information to a second core network device, wherein the first indication information includes an identifier of the first core network device, an identifier of the first terminal device, and an identifier of the second PDU session, and the first indication information is used to instruct the second core network device to instruct the first core network device to deactivate the second PDU session, wherein the second core network device serves the relay device.

With reference to the first aspect, in certain implementations of the first aspect, the sending the first indication information comprises: sending the first indication information to the first core network device, wherein the first indication information includes the identifier of the first terminal device and the identifier of the second PDU session.

With reference to the first aspect, in certain implementations of the first aspect, the sending the first indication information comprises: sending the first indication information to the first terminal device, wherein the first indication information includes the identifier of the second PDU session, and the first indication information is used to instruct the first terminal device to initiate deactivation of the second PDU session with the first core network device.

Based on the above technical solution, the sending of the first indication information by the donor access network device or the relay device may be: the donor access network device or the relay device sends the first indication information to the second core network device to instruct the second core network device to instruct the first core network device to deactivate the second PDU session; or, the first indication information may be sent directly to the first core network device; or, the first indication information may be sent to the first terminal device to instruct the first terminal device to instruct the first core network device to deactivate the second PDU session, etc. The first core network device may be instructed to deactivate the second PDU session in different ways, thereby improving solution flexibility.

With reference to the first aspect, in certain implementations of the first aspect, the method further comprises: releasing resources configured for the second PDU session.

With reference to the first aspect, in certain implementations of the first aspect, before the releasing resources configured for the second PDU session, the method further comprises: receiving second indication information, wherein the second indication information is used to instruct releasing of resources configured for the second PDU session.

In a second aspect, a communication method is provided. The method may be performed by a first core network device, or may be performed by a component (e.g., a chip, a circuit, or a chip system) of the first core network device. This application does not limit the foregoing. For example, the first core network device is a core network device serving the first terminal device, e.g., the first core network device is an AMF managing the first terminal device.

The communication method comprises: receiving indication information for deactivating a second protocol data unit (PDU) session of a first terminal device; deactivating the second PDU session, wherein a data radio bearer (DRB) corresponding to a first PDU session established by a relay device is used for carrying data of a backhaul link, the backhaul link is a backhaul link for transmitting data of the second PDU session, the first PDU session is associated with a first network slice, and a camping cell of the relay device is outside a service area of the first network slice.

Based on the above technical solution, after the core network device serving the first terminal device receives the indication information indicating deactivation of the second PDU session, it performs the procedure of deactivating the second PDU session in response to the indication information, thereby avoiding service failure or interruption caused by the first terminal device continuing to perform service transmission based on the second PDU session in a situation where the DRB corresponding to the first PDU session associated with the first network slice established by the relay device can no longer be used for carrying data of the backhaul link (the backhaul link being the backhaul link for transmitting data of the second PDU session).

With reference to the second aspect, in certain implementations of the second aspect, the receiving indication information for deactivating the second PDU session of the first terminal device comprises: receiving the indication information from at least one of the following devices: the relay device, a donor access network device, a second core network device, or the first terminal device, wherein the second core network device serves the relay device, and the indication information includes the identifier of the first terminal device and the identifier of the second PDU session.

Based on the above technical solution, the first core network device may receive, from any one or more of the relay device, the donor access network device, the second core network device, or the first terminal device, indication information for deactivating the second protocol data unit (PDU) session of the first terminal device, thereby improving solution flexibility.

With reference to the second aspect, in certain implementations of the second aspect, the method further comprises: sending second indication information, wherein the second indication information is used to instruct releasing of resources configured for the second PDU session.

In a third aspect, a communication method is provided. The method may be performed by a second core network device, or may be performed by a component (e.g., a chip, a circuit, or a chip system) of the second core network device. This application does not limit the foregoing. For example, the second core network device is a core network device serving the relay device, e.g., the second core network device is an AMF managing the relay device.

The communication method comprises: receiving first indication information, wherein the first indication information includes an identifier of a first core network device, an identifier of a first terminal device, and an identifier of a second protocol data unit (PDU) session; sending sixth indication information in response to the first indication information, wherein the sixth indication information is used to instruct the first core network device to deactivate the second PDU session, wherein a data radio bearer (DRB) corresponding to a first PDU session established by a relay device is used for carrying data of a backhaul link, the backhaul link is a backhaul link for transmitting data of the second PDU session, the first PDU session is associated with a first network slice, and a camping cell of the relay device is outside a service area of the first network slice.

Based on the above technical solution, after the core network device serving the relay device receives the indication information indicating the first core network device to deactivate the second PDU session, it sends the sixth indication information for deactivating the second PDU session to the first core network device in response to the indication information, thereby avoiding service failure or interruption caused by the first terminal device continuing to perform service transmission based on the second PDU session in a situation where the DRB corresponding to the first PDU session associated with the first network slice established by the relay device can no longer be used for carrying data of the backhaul link (the backhaul link being the backhaul link for transmitting data of the second PDU session).

With reference to the third aspect, in certain implementations of the third aspect, the receiving the first indication information comprises: receiving the first indication information from the relay device and/or the donor access network device.

With reference to the third aspect, in certain implementations of the third aspect, the method further comprises: deactivating the first PDU session.

In a fourth aspect, a communication method is provided. The method may be performed by a first terminal device, or may be performed by a component (e.g., a chip, a circuit, or a chip system) of the first terminal device. This application does not limit the foregoing.

The communication method comprises: receiving first indication information, wherein the first indication information includes an identifier of a second protocol data unit (PDU) session; sending seventh indication information to a first core network device in response to the first indication information, wherein the seventh indication information includes the identifier of the second PDU session, and the seventh indication information is used to instruct deactivation of the second PDU session, wherein a data radio bearer (DRB) corresponding to a first PDU session established by a relay device is used for carrying data of a backhaul link, the backhaul link is a backhaul link for transmitting data of the second PDU session, the first PDU session is associated with a first network slice, and the camping cell of the relay device is outside the service area of the first network slice.

Based on the above technical solution, after the first terminal device receives the indication information indicating the first core network device to deactivate the second PDU session, it sends the seventh indication information for deactivating the second PDU session to the first core network device in response to the indication information, thereby avoiding service failure or interruption caused by the first terminal device continuing to perform service transmission based on the second PDU session in a situation where the DRB corresponding to the first PDU session associated with the first network slice established by the relay device can no longer be used for carrying data of the backhaul link (the backhaul link being the backhaul link for transmitting data of the second PDU session).

With reference to the fourth aspect, in certain implementations of the fourth aspect, the receiving the first indication information comprises: receiving the first indication information from the relay device and/or the donor access network device.

In a fifth aspect, a communication method is provided. The method may be performed by a second core network device, or may be performed by a component (e.g., a chip, a circuit, or a chip system) of the second core network device. This application does not limit the foregoing. For example, the second core network device is a core network device serving the relay device, e.g., the second core network device is an AMF managing the relay device.

The communication method comprises: receiving third indication information, wherein the third indication information is used to instruct deactivation of a first protocol data unit (PDU) session, a data radio bearer (DRB) corresponding to the first PDU session is used for carrying data of a backhaul link, the backhaul link is a backhaul link for transmitting data of a second PDU session of a first terminal device, and the first terminal device is a terminal device that accesses the relay device; updating, in response to the third indication information, the network slice associated with the first PDU session from a first network slice to a second network slice, wherein the second network slice has available resources in a first cell, the first cell is a camping cell of the relay device, and the first cell is outside a service area of the first network slice; sending a first message, wherein the first message is used to indicate the second network slice associated with the first PDU session.

Based on the above technical solution, in a scenario where the current camping cell of the relay device is outside the service area of the first network slice, after the core network device serving the relay device receives the third indication information indicating deactivation of the first PDU session, it determines that no resource is configured for the first network slice in the first cell, and in response to the third indication information, updates the network slice associated with the first PDU session from the first network slice to the second network slice, wherein the second network slice has available resources in the first cell, so that the DRB corresponding to the first PDU session associated with the second network slice can continue to provide a backhaul link for the second PDU session of the first terminal device, thereby allowing the first terminal device to continue performing service transmission based on the second PDU session.

In a sixth aspect, a communication method is provided. The method may be performed by a donor access network device or a relay device, or may be performed by a component (e.g., a chip, a circuit, or a chip system) of the donor access network device or the relay device. This application does not limit the foregoing.

The communication method comprises: determining that a first cell is outside a service area of a first network slice, wherein the first cell is a camping cell of a relay device, the first network slice is associated with a first protocol data unit (PDU) session established by the relay device, a data radio bearer (DRB) corresponding to the first PDU session is used for carrying data of a backhaul link, the backhaul link is a backhaul link for transmitting data of a second PDU session of a first terminal device, and the first terminal device is a terminal device that accesses the relay device; determining that a DRB corresponding to a third PDU session is used for carrying data of the backhaul link, wherein the third PDU session is associated with a third network slice, and the third network slice has available resources in the first cell.

Based on the above technical solution, taking the donor access network device or the relay device as the performing entity as an example, the donor access network device or the relay device may determine that the current camping cell of the relay device is outside the service area of the first network slice, and the DRB corresponding to the first PDU session associated with the first network slice established by the relay device can no longer be used for carrying data of the backhaul link, wherein the backhaul link is the backhaul link for transmitting data of the second PDU session. Therefore, the donor access network device or the relay device may select the DRB corresponding to the third PDU session associated with another third network slice that has resources configured in the first cell for carrying data of the backhaul link, thereby enabling the first terminal device to continue performing service transmission based on the second PDU session.

With reference to the sixth aspect, in certain implementations of the sixth aspect, the determining that the first cell is outside the service area of the first network slice comprises: determining that the first cell does not include resources allocated for the first network slice; or determining, based on the identifier of the first cell and identifiers of at least one cell included in first service area information, that the identifier of the first cell does not belong to any of the identifiers of the at least one cell, wherein the first service area information is information provided by a second core network device serving the relay device to indicate the service area of the first network slice; or determining that the first PDU session has been deactivated.

In a seventh aspect, a communication method is provided. The method may be performed by a relay device, or may be performed by a component (e.g., a chip, a circuit, or a chip system) of the relay device. This application does not limit the foregoing.

The communication method comprises: the relay device setting the identifier of the camping cell provided by the relay device for the first terminal device to the identifier of a first cell, wherein the first cell is the camping cell of the relay device, and the first terminal device is a terminal device that accesses the relay device.

Based on the above technical solution, the camping cell of the first terminal device is provided by the relay device. In this technical solution, the relay device may align the identifier of the camping cell provided by the relay device with the identifier of the current camping cell of the relay device, which may be understood as the camping cell of the terminal device accessing the relay device being an extension of the camping cell of the relay device. If the current camping cell of the relay device is not within the service area of a certain network slice, the terminal device accessing the relay device can likewise learn that its current camping cell is not within the service area of that network slice.

With reference to the seventh aspect, in certain implementations of the seventh aspect, before the relay device sets the identifier of the camping cell provided by the relay device to the identifier of the first cell, the method further comprises: the relay device determining that the first cell is outside a service area of a first network slice, wherein the first network slice is associated with a first protocol data unit (PDU) session established by the relay device, a DRB corresponding to the first PDU session serves as a backhaul link for transmitting data of a second PDU session of the first terminal device, and the backhaul link is used for carrying data between the relay device and the donor access network device.

In an eighth aspect, a communication method is provided. The method may be performed by a first core network device, or may be performed by a component (e.g., a chip, a circuit, or a chip system) of the first core network device. This application does not limit the foregoing. For example, the first core network device is a core network device serving the first terminal device, e.g., the first core network device is an AMF managing the first terminal device.

The communication method comprises: receiving indication information for updating second service area information, wherein the second service area information is information provided by the first core network device serving the first terminal device to indicate a service area of a fourth network slice; updating the second service area information in response to the indication information, wherein the updated second service area information does not include the identifier of a second cell, and the second cell is the camping cell provided by the relay device for the first terminal device; sending the updated second service area information to the first terminal device.

Based on the above technical solution, after the first core network device receives the indication information indicating updating of the second service area information, it updates the second service area information so that the updated second service area information does not include the identifier of the second cell, and sends the updated second service area information to the first terminal device. The first terminal device can then determine, based on the updated second service area information, that the second cell is outside the service area of the fourth network slice. Therefore, when the camping cell of the first terminal device is the second cell, the second PDU session associated with the fourth network slice established by the first terminal device needs to be deactivated, thereby avoiding service failure or interruption caused by the first terminal device continuing to perform service transmission based on the second PDU session.

With reference to the eighth aspect, in certain implementations of the eighth aspect, the receiving indication information for updating the second service area information comprises: receiving the indication information from at least one of the following devices: the relay device, a donor access network device, or the first terminal device.

Based on the above technical solution, the first core network device may receive, from any one or more of the relay device, the donor access network device, or the first terminal device, indication information for updating the second service area information, thereby improving solution flexibility.

In a ninth aspect, a communication method is provided. The method may be performed by a donor access network device or a relay device, or may be performed by a component (e.g., a chip, a circuit, or a chip system) of the donor access network device or the relay device. This application does not limit the foregoing.

The communication method comprises: determining that a first cell is outside a service area of a first network slice, wherein the first cell is a camping cell of a relay device, the first network slice is associated with a first protocol data unit (PDU) session established by the relay device, a data radio bearer (DRB) corresponding to the first PDU session is used for carrying data of a backhaul link, the backhaul link is a backhaul link for transmitting data of the second PDU session, and the first terminal device is a terminal device that accesses the relay device; sending fourth indication information, wherein the fourth indication information is used to instruct a first core network device to update second service area information, the first core network device serves the first terminal device, and the second service area information is information provided by the first core network device to indicate a service area of a fourth network slice.

With reference to the ninth aspect, in certain implementations of the ninth aspect, the determining that the first cell is outside the service area of the first network slice comprises: determining that the first cell does not include resources allocated for the first network slice; or determining, based on the identifier of the first cell and identifiers of at least one cell included in first service area information, that the identifier of the first cell does not belong to any of the identifiers of the at least one cell, wherein the first service area information is information provided by a second core network device serving the relay device to indicate the service area of the first network slice; or determining that the first PDU session has been deactivated.

With reference to the ninth aspect, in certain implementations of the ninth aspect, the sending the fourth indication information comprises: sending the fourth indication information to the first core network device and/or the first terminal device.

In a tenth aspect, a communication method is provided. The method may be performed by a first terminal device, or may be performed by a component (e.g., a chip, a circuit, or a chip system) of the first terminal device. This application does not limit the foregoing.

The communication method comprises: sending fifth indication information, wherein the fifth indication information is used to instruct a first core network device to update second service area information, the second service area information is information provided by the first core network device to indicate a service area of a fourth network slice, and the first core network device is a core network device serving the first terminal device; receiving updated second service area information, wherein the updated second service area information does not include the identifier of a second cell, and the second cell is the camping cell provided by the relay device for the first terminal device.

With reference to the tenth aspect, in certain implementations of the tenth aspect, before the sending the fifth indication information, the method further comprises: receiving fourth indication information from the relay device and/or the donor access network device, wherein the fourth indication information is used to instruct the first core network device to update the second service area information.

In an eleventh aspect, a communication method is provided. The method may be performed by a first terminal device, or may be performed by a component (e.g., a chip, a circuit, or a chip system) of the first terminal device. This application does not limit the foregoing.

The communication method comprises: the first terminal device receiving eighth indication information, wherein the eighth indication information is used to indicate that the second cell does not belong to the service area of a fourth network slice; the first terminal device, in response to the eighth indication information, determining that the second cell is not regarded as a cell within the service area of the fourth network slice, or the first terminal device, in response to the eighth indication information, removing the second cell from the service area of the fourth network slice, wherein the second cell is the camping cell provided by the relay device, the service area of the fourth network slice is at least one cell indicated by second service area information provided by the first core network device serving the first terminal device, the at least one cell includes the second cell, and the first terminal device is a terminal device that accesses the relay device.

In a twelfth aspect, a communication apparatus is provided. The communication apparatus may be a first apparatus, or may be a module or unit (e.g., a chip, a chip system, or a circuit) in the first apparatus that corresponds one-to-one to the methods/operations/steps/actions described in any one of the first to eleventh aspects and any implementation thereof, or may be an apparatus that can be used in conjunction with the first apparatus.

By way of example, the first apparatus may be the donor access network device or relay device of the first aspect, sixth aspect, or ninth aspect, or a component (e.g., a chip, a circuit, or a chip system) of the donor access network device or relay device. The first apparatus includes a transceiver module or unit for performing the transceiving operations/steps/actions described in the first aspect, sixth aspect, or ninth aspect and any implementation thereof, and a processing module or unit for performing the processing operations/steps/actions described in the first aspect, sixth aspect, or ninth aspect and any implementation thereof.

By way of example, the first apparatus may be the first core network device of the second aspect or eighth aspect, or a component (e.g., a chip, a circuit, or a chip system) of the first core network device. The first apparatus includes a transceiver module or unit for performing the transceiving operations/steps/actions described in the second aspect or eighth aspect and any implementation thereof, and a processing module or unit for performing the processing operations/steps/actions described in the second aspect or eighth aspect and any implementation thereof.

By way of example, the first apparatus may be the second core network device of the third aspect or fifth aspect, or a component (e.g., a chip, a circuit, or a chip system) of the second core network device. The first apparatus includes a transceiver module or unit for performing the transceiving operations/steps/actions described in the third aspect or fifth aspect and any implementation thereof, and a processing module or unit for performing the processing operations/steps/actions described in the third aspect or fifth aspect and any implementation thereof.

By way of example, the first apparatus may be the first terminal device of the fourth aspect, tenth aspect, or eleventh aspect, or a component (e.g., a chip, a circuit, or a chip system) of the first terminal device. The first apparatus includes a transceiver module or unit for performing the transceiving operations/steps/actions described in the fourth aspect, tenth aspect, or eleventh aspect and any implementation thereof, and a processing module or unit for performing the processing operations/steps/actions described in the fourth aspect, tenth aspect, or eleventh aspect and any implementation thereof.

By way of example, the first apparatus may be the relay device of the seventh aspect, or a component (e.g., a chip, a circuit, or a chip system) of the relay device. The first apparatus includes a transceiver module or unit for performing the transceiving operations/steps/actions described in the seventh aspect and any implementation thereof, and a processing module or unit for performing the processing operations/steps/actions described in the seventh aspect and any implementation thereof.

In a thirteenth aspect, a communication apparatus is provided. The communication apparatus is configured to perform the method provided in any of the first to eleventh aspects and any implementation thereof. Specifically, the communication apparatus may include units and/or modules (e.g., a processing unit and a transceiving unit) for performing the method provided in any of the first to eleventh aspects and any implementation thereof.

In one implementation, the communication apparatus is a device. The transceiving unit may be a transceiver or an input/output interface. The processing unit may be at least one processor. Optionally, the transceiver may be a transceiving circuit. Optionally, the input/output interface may be an input/output circuit.

In another implementation, the communication apparatus may be a chip, chip system, or circuit in a device. In this case, the transceiving unit may be an input/output interface, interface circuit, output circuit, input circuit, pin, or related circuit on the chip, chip system, or circuit; and the processing unit may be at least one processor, processing circuit, or logic circuit.

In a fourteenth aspect, this application provides a processor for performing the methods provided in the first to eleventh aspects.

For sending and obtaining/receiving operations involved in the processor, unless otherwise stated or unless such interpretation contradicts the actual function or inherent logic of such operations in the relevant description, these operations may be understood as outputting and receiving, inputting, and other operations of the processor, or may be understood as sending and receiving operations performed by a radio frequency circuit and an antenna. This application does not limit the foregoing.

In a fifteenth aspect, a computer-readable storage medium is provided. The computer-readable storage medium stores a computer program. When the computer program is run on a communication apparatus, the communication apparatus is caused to perform the method of any one implementation of the first to eleventh aspects.

In a sixteenth aspect, a computer program product containing instructions is provided. When the computer program product is run on a computer, the computer is caused to perform the method provided by any one implementation of the first to eleventh aspects.

In a seventeenth aspect, a chip is provided. The chip includes a processor and a communication interface. The processor reads instructions through the communication interface and performs the method provided by any one implementation of the first to eleventh aspects.

Optionally, as one implementation, the chip further includes a memory. The memory stores a computer program or instructions, and the processor is configured to execute the computer program or instructions stored in the memory. When the computer program or instructions are executed, the processor is configured to perform the method provided by any one implementation of the first to sixth aspects.

In an eighteenth aspect, a communication system is provided, comprising: a donor access network device or relay device performing the method of any one implementation of the first aspect; a first core network device performing the method of any one implementation of the second aspect; a second core network device performing the method of any one implementation of the third aspect; and a first terminal device performing the method of any one implementation of the fourth aspect.

### BRIEF DESCRIPTION OF DRAWINGS

FIG. 1 is a schematic diagram of a communications system 100 applicable to embodiments of this application.
FIG. 2 is a schematic diagram of a network slice service area provided in this application.
FIG. 3 is a schematic diagram of a relay architecture provided in this application.
FIG. 4 is a schematic diagram of data transmission in an L3 relay system provided in this application.
FIG. 5 is a schematic flowchart of a communication method provided in this application.
FIG. 6 is a schematic flowchart of another communication method provided in this application.
FIG. 7 is a schematic flowchart of still another communication method provided in this application.
FIG. 8 is a schematic flowchart of still another communication method provided in this application.
FIG. 9 is a schematic flowchart of still another communication method provided in this application.
FIG. 10 is a schematic flowchart of still another communication method provided in this application.
FIG. 11 is a schematic flowchart of still another communication method provided in this application.
FIG. 12 is a schematic block diagram of a communication apparatus 10 provided in embodiments of this application.
FIG. 13 is a schematic diagram of another communication apparatus 20 provided in embodiments of this application.
FIG. 14 is a schematic diagram of a chip system 30 provided in embodiments of this application.

### DETAILED DESCRIPTION OF EMBODIMENTS

For ease of understanding the embodiments of this application, the following points are noted.

First, in this application, "used to indicate" may include direct indication and indirect indication. When a piece of indication information is described as being used to indicate A, it may mean that the indication information directly indicates A or indirectly indicates A, and does not necessarily mean that the indication information directly includes A.

The information indicated by the indication information is referred to as information to be indicated. In a specific implementation, there are many ways to indicate the information to be indicated. The information to be indicated may be sent as a whole or may be split into multiple sub-pieces of information that are sent separately, and the sending periods and/or sending moments of these sub-pieces of information may be the same or different. The specific sending method is not limited in this application. The sending periods and/or sending moments of these sub-pieces of information may be predefined, e.g., predefined according to a protocol, or may be configured by the transmit end device by sending configuration information to the receive end device.

Second, in this application, "at least one" means one or more, and "plurality" means two or more. In addition, in the embodiments of this application, "first," "second," and various number identifiers (e.g., "#1," "#2," etc.) are used for descriptive purposes only and are not intended to limit the scope of the embodiments of this application. The numerical order of the steps described below does not imply an execution order; the execution order of each step should be determined by its function and inherent logic, and should not impose any limitation on the implementation process of the embodiments of this application. It should be understood that the objects described in this manner can be interchanged where appropriate to describe solutions beyond the embodiments of this application. Furthermore, in the embodiments of this application, identifiers such as "S501" and "S502" are only labels for descriptive purposes and are not intended to limit the order of execution of steps.

Third, in this application, words such as "exemplary" or "for example" are used to indicate examples, illustrations, or descriptions. Any embodiment or design described as "exemplary" or "for example" in this application shall not be interpreted as being more preferred or advantageous than other embodiments or designs. Rather, the use of words such as "exemplary" or "for example" is intended to present relevant concepts in a specific manner.

Fourth, "saving" referred to in the embodiments of this application may mean saving in one or more memories. The one or more memories may be separately deployed, or may be integrated in an encoder, decoder, processor, or communication apparatus. The one or more memories may also be partially separately deployed and partially integrated in a decoder, processor, or communication apparatus. The type of memory may be any form of storage medium, and this application does not limit the foregoing.

Fifth, a "protocol" referred to in the embodiments of this application may refer to a standard protocol in the field of communications, for example, may include an LTE protocol, an NR protocol, and related protocols applied in future communications systems. This application does not limit the foregoing.

Sixth, in the embodiments of this application, "in the case of," "when," and "if" may sometimes be used interchangeably. It should be noted that when the distinction is not emphasized, the meanings expressed are consistent.

Seventh, in the embodiments of this application, various terms and English abbreviations, such as radio resource control (radio resource control, RRC), are exemplary examples provided for ease of description and are not intended to constitute any limitation on this application. This application does not exclude the possibility of defining other terms in existing or future protocols that can implement the same or similar functions.

Eighth, the term "and/or" in this specification is merely an association relationship describing associated objects, indicating that three relationships may exist. For example, A and/or B may represent three cases: A alone, both A and B, and B alone. In addition, the character "/" in this specification generally indicates an "or" relationship between the associated objects before and after.

The technical solutions of this application are described below with reference to the accompanying drawings.

The technical solutions of the embodiments of this application may be applied to various communications systems, such as: a 5th generation (5th generation, 5G) system or new radio (new radio, NR), a long term evolution (long term evolution, LTE) system, an LTE frequency division duplex (frequency division duplex, FDD) system, an LTE time division duplex (time division duplex, TDD) system, etc. The technical solutions provided in this application may also be applied to future communications systems, such as a sixth generation mobile communications system. The technical solutions of the embodiments of this application may also be applied to device-to-device (device to device, D2D) communications, vehicle-to-everything (vehicle-to-everything, V2X) communications, machine to machine (machine to machine, M2M) communications, machine type communication (machine type communication, MTC), and Internet of Things (internet of things, IoT) communications systems or other communications systems.

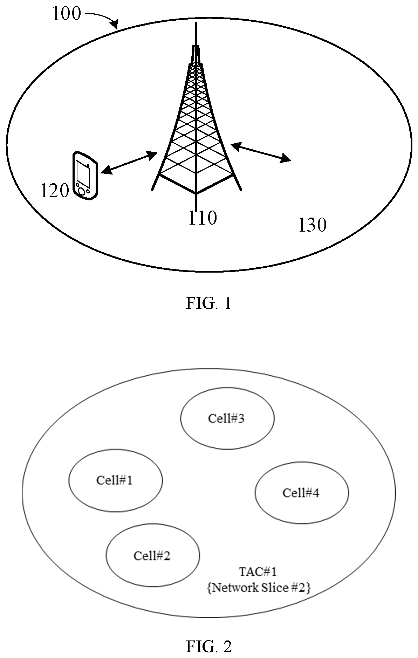

For ease of understanding the embodiments of this application, the communications system shown in FIG. 1 is first used as an example to describe in detail the communications system to which the embodiments of this application are applicable. FIG. 1 is a schematic diagram of a communications system 100 applicable to embodiments of this application. As shown in FIG. 1, the communications system 100 may include at least one access network device, such as the access network device 110 shown in FIG. 1; the communications system 100 may further include at least one terminal device, such as the terminal device 120 shown in FIG. 1; and the communications system 100 may further include at least one core network (core network, CN) device, such as the core network device 130 shown in FIG. 1. The access network device 110 and the terminal device 120 may communicate through a wireless link, and the access network device 110 and the core network device 130 may communicate through a wireless link. Each communications device, such as the access network device 110, the terminal device 120, and the core network device 130, may be configured with multiple antennas. For each communications device in the communications system 100, the configured multiple antennas may include at least one transmit antenna for sending signals and at least one receive antenna for receiving signals. Therefore, communications devices in the communications system 100, such as between the access network device 110 and the terminal device 120, may communicate using multi-antenna technology.

By way of example and not limitation, in the scenario shown in FIG. 1, communication may occur between the access network device and the terminal device in various ways, such as: point-to-point transmission between the access network device and the terminal device, multi-hop (or relay) transmission between the access network device and the terminal device, dual connectivity (dual connectivity, DC) or multi-connectivity transmission between multiple access network devices and terminal devices, etc. The embodiments of this application do not impose any limitation on the manner of communication between the access network device and the terminal device. For example, the transmission between the access network device and the terminal device may be uplink, downlink, access link, backhaul (backhaul) link, or sidelink (Sidelink), etc.

A terminal device (terminal equipment) in the embodiments of this application may refer to an access terminal, a subscriber unit, a subscriber station, a mobile station, a mobile console, a relay station, a remote station, a remote terminal, a mobile device, a user terminal, a user equipment (user equipment, UE), a terminal, a wireless communication device, a user agent, or a user apparatus. A terminal device may also be a cellular phone, a cordless phone, a session initiation protocol (session initiation protocol, SIP) phone, a wireless local loop (wireless local loop, WLL) station, a personal digital assistant (personal digital assistant, PDA), a handheld device with wireless communication capabilities, a computing device, or another processing device connected to a wireless modem, a vehicle-mounted device, a wearable device, a terminal device in a 5G network, or a terminal device in a future evolved public land mobile network (public land mobile network, PLMN), etc. The embodiments of this application do not limit the foregoing.

By way of example and not limitation, in the embodiments of this application, a wearable device may also be called a wearable smart device, which is a general term for intelligently designed wearable devices developed using wearable technologies applied to everyday wear, such as glasses, gloves, watches, clothing, and shoes. A wearable device is a portable device that is worn directly on the body or integrated into the user's clothing or accessories. A wearable device is not just a hardware device; it achieves powerful functions through software support, data interaction, and cloud-based interaction. Broadly defined wearable smart devices include those with full functions and large size that can implement full or partial functionality independently of a smartphone, for example, smart watches or smart glasses, as well as those that focus only on a specific type of application function and require coordination with other devices such as smartphones, such as various smart bands for monitoring vital signs and smart jewelry.

Furthermore, in the embodiments of this application, a terminal device may also be a terminal device in an IoT system. Its main technical characteristic is connecting objects to the network through communication technologies to achieve intelligent networking between people and machines, and between objects. In the embodiments of this application, IoT technology can achieve massive connectivity, deep coverage, and terminal power saving through, for example, narrow band (narrow band, NB) technology.

An access network device in the embodiments of this application may be any device with wireless transceiving functions used for communicating with terminal devices. Such a device includes but is not limited to: an evolved Node B (evolved Node B, eNB), a radio network controller (radio network controller, RNC), a Node B (Node B, NB), a base station controller (base station controller, BSC), a base transceiver station (base transceiver station, BTS), a home evolved NodeB (home evolved NodeB, HeNB, or home Node B, HNB), a baseband unit (baseBand unit, BBU), an access point (access point, AP) in a wireless fidelity (wireless fidelity, WIFI) system, a wireless relay device, a wireless backhaul node, a transmission point (transmission point, TP), or a transmission and reception point (transmission and reception point, TRP), and may also be a gNB in a 5G, e.g., NR, system, or a transmission point (TRP or TP), one or a group of antenna panels (including multiple antenna panels) of a base station in a 5G system, or a network node constituting a gNB or a transmission point, such as a baseband unit (baseBand unit, BBU) or a distributed unit (distributed unit, DU), and may also be a device for communicating with terminal devices in a future communications system, such as a gNB in a future communications system.

In some deployments, a gNB may include a centralized unit (centralized unit, CU) and a DU. The gNB may also include an active antenna unit (active antenna unit, AAU). The CU implements some functions of the gNB, and the DU implements some functions of the gNB. For example, the CU is responsible for handling non-real-time protocols and services, implementing functions of the radio resource control (radio resource control, RRC) layer and the packet data convergence protocol (packet data convergence protocol, PDCP) layer. The DU is responsible for handling physical layer protocols and real-time services, implementing functions of the radio link control (radio link control, RLC) layer, the media access control (media access control, MAC) layer, and the physical (physical, PHY) layer. The AAU implements some physical layer processing functions, radio frequency processing, and active antenna-related functions. Since information at the RRC layer eventually becomes information at the PHY layer, or originates from information at the PHY layer, in this architecture, higher layer signaling, such as RRC layer signaling, may also be considered to be sent by the DU, or sent by the DU+AAU. It should be understood that an access network device may be a device including one or more of a CU node, a DU node, and an AAU node. In addition, the CU may be classified as a network device in the radio access network (radio access network, RAN), or may be classified as a network device in the core network (core network, CN). This application does not limit the foregoing.

In different systems, CU (or CU-CP and CU-UP), DU, or RU may also have different names, but those skilled in the art can understand their meanings. For example, a radio access network may also be an ORAN architecture. In an ORAN system, a CU may also be called an O-CU (open CU), a DU may also be called an O-DU, a CU-CP may also be called an O-CU-CP, a CU-UP may also be called an O-CU-UP, and an RU may also be called an O-RU. Any of the CU (or CU-CP, CU-UP), DU, and RU in this application may be implemented by a software module, a hardware module, or a combination of a software module and a hardware module.

The core network device part in the embodiments of this application may include but is not limited to the following NFs: a user plane function (user plane function, UPF), a network exposure function (network exposure function, NEF), a network function repository function (network function repository function, NRF), a policy control function (policy control function, PCF), a unified data management (unified data management, UDM), a unified data repository (unified data repository, UDR), a network data analytics function (network data analytics function, NWDAF), an authentication server function (authentication server function, AUSF), an access and mobility management function (access and mobility management function, AMF), a session management function (session management function, SMF), a network slice selection function (network slice selection function, NSSF), etc. Among these, AMF, SMF, UPF, NEF, AUSF, NRF, PCF, NSSF, and UDM may be understood as network elements in the core network for implementing different functions, which may, for example, be combined into network slices as needed. These core network elements may each be an independent device or may be integrated in the same device to implement different functions. This application does not limit the specific forms of the foregoing network elements.

It should be understood that the above naming is only defined for ease of distinguishing different functions and should not constitute any limitation on this application. This application does not exclude the possibility of adopting other names in 5G networks and other future networks. For example, in future communications networks, some or all of the foregoing network elements may retain the terminology of 5G or may adopt other names.

By way of example and not limitation, in the embodiments of this application, CN devices are used to provide user connectivity, user management, and service bearer, and serve as bearer networks providing interfaces to external networks. This application mainly involves the AMF network element (also referred to as AMF, AMF device, or AMF unit) in the core network. AMF is a control plane network function provided by an operator network, and is responsible for access control and mobility management for terminal devices accessing the operator network, including, for example, mobile state management, assignment of temporary user identity identifiers, and user authentication and authorization.

In the embodiments of this application, a terminal device, an access network device, or a core network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as main memory). The operating system may be any one or more computer operating systems that implement service processing through processes, for example, a Linux operating system, a Unix operating system, an Android operating system, an iOS operating system, or a Windows operating system. The application layer includes applications such as a browser, an address book, word processing software, and instant messaging software. Furthermore, the embodiments of this application do not particularly limit the specific structure of the entity performing the method provided in the embodiments of this application, as long as communication according to the method provided in the embodiments of this application can be performed by running a program that records the code of the method provided in the embodiments of this application. For example, the entity performing the method provided in the embodiments of this application may be a terminal device or a network device, or may be a functional module in a terminal device or a network device that is capable of invoking and executing programs.

In addition, various aspects or features of this application may be implemented as a method, apparatus, or article of manufacture using standard programming and/or engineering techniques. The term "article of manufacture" as used in this application encompasses a computer program accessible from any computer-readable device, carrier, or medium. For example, computer-readable media may include, but are not limited to: magnetic storage devices (e.g., hard disks, floppy disks, or magnetic tapes), optical disks (e.g., compact discs (compact disc, CD), digital versatile discs (digital versatile disc, DVD), etc.), smart cards, and flash memory devices (e.g., erasable programmable read-only memory (erasable programmable read-only memory, EPROM), cards, sticks, or key drives). In addition, various storage media described herein may represent one or more devices and/or other machine-readable media for storing information. The term "machine-readable storage medium" may include but is not limited to wireless channels and various other media capable of storing, containing, and/or carrying instructions and/or data.

It should be understood that FIG. 1 uses communications between an access network device and a terminal device, and between the access network device and a core network device, as examples to briefly illustrate one communications scenario in which this application can be applied, and does not impose limitations on other scenarios in which this application can be applied. It should also be understood that FIG. 1 is only a simplified schematic diagram for ease of understanding. The communications system may also include other network devices or other terminal devices, which are not shown in FIG. 1.

For ease of understanding the embodiments of this application, some basic concepts involved in this application are briefly described. It should be understood that the basic concepts described below are explained by taking the basic concepts specified in the NR protocol as examples, but this does not limit the embodiments of this application to being applicable only to NR systems. Therefore, standard names that appear when the NR system is used as an example are functional descriptions, and the specific names are not limiting; they merely represent the functions of the device and can be correspondingly extended to other future systems.

### 1. Network Slicing (network slicing)

With the development of mobile communications technologies, various new services and application scenarios continue to emerge. These services have vastly different requirements regarding network functions, connection performance, security, and other aspects. If a single network is used to carry all these services, it would be difficult to simultaneously satisfy requirements such as high bandwidth, low latency, and high reliability. In addition, building a separate dedicated network for each service would incur enormous costs. This requires 5G to be flexible and scalable while being capable of meeting different service requirements. To this end, 5G provides users with customized network services through end-to-end network slicing (also referred to simply as "slicing"). Through flexible allocation of network resources and on-demand networking, 5G virtualizes multiple logically isolated sub-networks with different characteristics on the same set of physical infrastructure to provide targeted services to users.

Different logical sub-networks are identified and distinguished by single network slice selection assistance information (single network slice selection assistance information, S-NSSAI).

By way of example, each S-NSSAI may include the following:
1) Slice/service type (slice service type, SST): used to indicate the features and service types specific to the slice;
2) Slice differentiator (slice differentiator, SD): as a supplement to SST, may further differentiate among multiple network slice instances satisfying the same SST. The SD is an optional element of S-NSSAI.

It should be understood that NSSAI below refers to one or more S-NSSAIs.

For NSSAI, there are the following specific categories:
1) Subscribed NSSAI (subscribed NSSAI (subscribed NSSAI): belongs to the user's subscription data;
2) Default NSSAI (default NSSAI): according to the operator's policy, one or more S-NSSAIs in the user's subscribed NSSAI may be set as the default NSSAI. If the UE does not include an allowed NSSAI in the registration request (registration request) message, and if a default NSSAI exists, the network may use the default NSSAI to serve the UE.
3) Requested NSSAI (requested NSSAI): refers to the allowed NSSAI or configured NSSAI included by the UE in the registration request message.
4) Allowed NSSAI: indicates which S-NSSAIs in the NSSAI requested by the UE are allowed by the network. The network may indicate the allowed NSSAI to the UE through the "allowed NSSAI" information element (information element, IE) in the registration accept (registration accept) message.
5) Configured NSSAI: refers to the NSSAI configured by the network for use by the UE. After receiving configuration parameters indicating the configured NSSAI, the UE learns which S-NSSAIs are available under that network based on the configuration parameters. The network may indicate the configured NSSAI to the UE through the "configured NSSAI" IE in the registration accept (registration accept) message.
6) Rejected NSSAI (rejected NSSAI): indicates which S-NSSAIs in the NSSAI requested by the UE have been rejected by the network, for example, because these S-NSSAIs are not supported by the core network or the access network side.
7) Partially allowed NSSAI (partially allowed NSSAI (partially allowed NSSAI): similar to the above-mentioned concept of allowed NSSAI, the difference being that the partially allowed NSSAI is supported in some TAs within the UE's RA.
8) Partially rejected NSSAI (rejected NSSAI): similar to the above-mentioned concept of rejected NSSAI, the difference being that the partially rejected NSSAI is not supported in some TAs within the UE's RA.

Specifically, the slice list supported by the access network device is pre-configured by the operation, administration and maintenance (operation, administration and maintenance, OAM) at the granularity of tracking areas (tracking area, TA), i.e., all cells within a specific TA support the same slices. By way of example, a TA includes one or more cells. The access network device can report the slice list to the core network when establishing a communication interface (e.g., an NG interface) with the core network. If the access network device also supports CU/DU separation, the DU sends the slice list supported by each TA to the CU, which then reports it to the core network.

### 2. Network Slice Area of Service (network slice area of service, NS-AoS)

Considering that when a slice is deployed within a certain time interval and subsequently withdrawn, the UE and network configurations may be affected. For example, when a slice is no longer available or becomes available, this may affect the allowed NSSAI and other parameters, and consequently the registration area (registration area, RA) may also need to be changed. Taking FIG. 2 as an example, the TA identified by TAC#1 supports network slice #2, and the TA contains a total of four cells. Due to deployment or other reasons, resources configured for network slice #2 in Cell#2 suddenly become constrained, i.e., it may be understood that no resources are configured for network slice #2 within Cell#2, so Cell#2 actually cannot provide network slice #2 services for the UE. To avoid affecting the UE and the network side, NS-AoS is introduced to indicate the service area for a specific slice (an area consisting of one or more cells). The characteristics are as follows:
1) NS-AoS is deployed on the RAN side; the AMF can obtain via OAM the NS-AoS configured for each slice within the UE's RA;
2) When the UE indicates support for NS-AoS capability, the AMF may send the NS-AoS of the configured NSSAI to the UE through a registration accept or UE configuration update message;
3) After the UE receives the NS-AoS for different slices, possible UE behaviors are:
   If the UE receives the NS-AoS for a requested NSSAI, after the UE initiates a registration request for that slice from outside the NS-AoS, that slice will be determined by the AMF as the allowed NSSAI or the partially allowed NSSAI;
   If the UE receives the NS-AoS for a rejected NSSAI or partially rejected NSSAI, the UE can only initiate a registration request for those slices from cells within the NS-AoS of the above-mentioned slices;
   If the UE receives the NS-AoS for an allowed NSSAI or partially allowed NSSAI, the UE can only activate the user plane for already-established PDU sessions within cells in the NS-AoS of the above-mentioned slices. For a connected-mode UE, if the target cell during handover is outside the NS-AoS of the slice associated with the already-established PDU session, that target cell will reject the PDU session during the handover, i.e., no RAN-side resources will be prepared for that PDU session, and the AMF will be notified via an NGAP message to instruct the SMF to deactivate that PDU session.

### 3. Network Slice as Group (network slice as group, NSAG)

The access network device can notify the UE via broadcast of cell reselection priorities for slices and specific random access parameters; this information is included in system information block 16 (system information block 16, SIB16) and SIB1 respectively. Considering that broadcasting at the slice granularity may impose relatively high overhead on the SIB, the concept of a network slice group (slice group, also referred to as NSAG) is proposed, i.e., one or more network slices are grouped and identified together. Specifically, one or more S-NSSAIs can be mapped to a specific NSAG ID, and within a specific area, the mapping between an NSAG ID and an S-NSSAI is unique.

### 4. Relay Architecture

The relay architecture includes a relay device (relay node). The relay device includes a relay terminal device part and a relay network device part. The relay terminal device part may be represented as the UE part, and the relay network device part may be represented as the base station part (e.g., gNB). The relay device may thus be understood as a device composed of a UE and a gNB. The UE part of the relay device (may be referred to as a mobile terminal (Mobile Terminal, relay-MT)) has an air interface connection with the donor base station (donor-gNB), which may be referred to as the Un interface. The gNB part of the relay device (may be referred to as relay-gNB) has a communication interface with the donor-gNB (e.g., an Xn interface and an NG interface). Control plane and user plane data on the Xn interface and the NG interface may be transmitted over DRBs on the air interface between the relay-MT and the donor-gNB. It should be understood that the names of communication interfaces referred to in this application (e.g., the Un interface, Xn interface, and NG interface mentioned above) are all examples and do not constitute any limitation on the protection scope of this application. The names of the communication interfaces may also be otherwise, which will not be reiterated here.

For example, taking the uplink as an example, control plane and user plane data on the relay device is encapsulated in the user plane data of the relay-MT and sent to the donor-gNB. At this point, the mission of the relay-MT is complete. The donor-gNB maintains a bearer mapping relationship and maps the DRB of the relay-MT again to the general packet radio system (general packet radio system, GPRS) tunneling protocol-user plane (GPRS tunneling protocol-User Plane, GTP-U) tunnel of the UE accessing the relay device (for user plane) or to the S1AP tunnel of the relay-gNB (for control plane).

By way of example, the relay device described above has complete gNB functions, i.e., a complete base station side protocol stack. The relay architecture in this application may be referred to as NR layer 3 relay (NR L3 Relay).

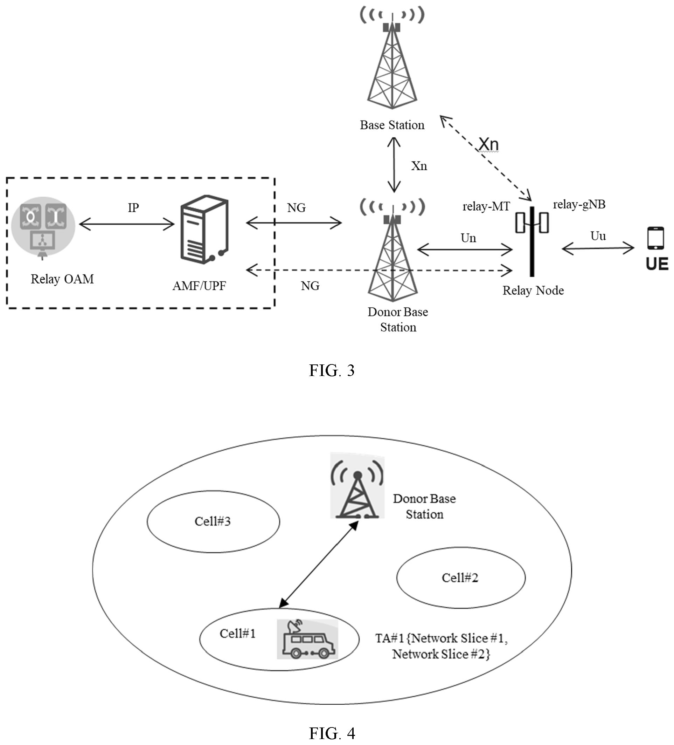

For ease of understanding, the architecture of an NR L3 Relay system is briefly introduced with reference to FIG. 3.

As can be seen from FIG. 3, the NR L3 Relay system includes a core network device (e.g., the AMF/UPF shown in FIG. 3), an access network device (e.g., the donor base station (donor-gNB) and base station (gNB) shown in FIG. 3), a relay device (e.g., the relay device shown in FIG. 3, which includes a relay-MT and a relay-gNB), and a terminal device (e.g., the UE shown in FIG. 3). There is a communication interface between the UE and the relay-gNB part of the relay device (e.g., the Uu interface shown in FIG. 3), and there is a communication interface between the relay-MT part of the relay device and the donor base station (e.g., the Un interface shown in FIG. 3).

### 5. Data Transmission in L3 Relay System

In an NR system, the establishment of a DRB for a UE is triggered by the establishment of a PDU session of the UE. That is, in an NR system, only when the UE wants to initiate a service does the base station establish a DRB with the corresponding QoS. The base station does not currently support directly triggering DRB establishment.

As described above, a relay device includes a relay-MT and a relay-gNB. The relay-MT can connect to the donor base station through an air interface connection. Control plane or user plane data of the UE accessing the relay-gNB may be backhauled via a DRB established between the relay-MT and the donor-gNB. Specifically, the PDU session corresponding to the DRB provided by the relay-MT for the UE as a backhaul may be triggered by the UE's service. Assuming that the UE wants to establish a PDU session associated with Slice#1, the relay-MT may, based on the UE's PDU session establishment request, trigger the establishment of a PDU session. The slice identifier associated with this PDU session may or may not be the same as the slice requested by the UE (i.e., Slice#1), without limitation, thereby enabling the establishment of the DRB between the relay-MT and the donor-gNB to provide the UE with relay backhaul service.

The communications scenario in which the communication method provided by the embodiments of this application can be applied has been briefly introduced above with reference to FIG. 1, along with the basic concepts that may be involved in the embodiments of this application. The L3 Relay system and the data transmission mode in the L3 Relay system were also introduced in the basic concepts. When the UE moves together with the relay device to a cell outside the NS-AoS of a slice (e.g., network slice #1), the relay-MT of the relay device cannot initiate a PDU session establishment request for that network slice #1, or even if a PDU session associated with network slice #1 exists, the data plane of that PDU session will not be activated, and the corresponding already-established DRB will be released. This may result in the UE's request for slice services failing or already-established services being interrupted.

To facilitate understanding of the potential problems with the above-described data transmission mode in the L3 Relay system, the following description is given with reference to FIG. 4.

As shown in FIG. 4, assume that the TA identified by TAC#1 is the UE's RA, the list of network slices supported within TA#1 is {network slice #1, network slice #2} ("{}" denotes a list), and TA#1 includes three static cells: Cell#1, Cell#2, and Cell#3, where Cell#1 has no resources allocated for network slice #1. The relay device is a mobile relay device (e.g., a vehicle-mounted relay device). The relay-gNB of the relay device includes Cell#4. Cell#4 can support both network slice #1 and network slice #2, and resources have been allocated for both network slice #1 and network slice #2. Cell#4 moves together with the relay device and is not a static cell that has been deployed.

Assume that the UE accesses the cell of the relay-gNB (i.e., Cell#4), and both the UE and the relay-MT can receive NS-AoS information from their respective AMFs. For example, the NS-AoS information for network slice #1 received by the UE from the AMF serving the UE includes the cell identifiers of Cell#2, Cell#3, and Cell#4 (e.g., the NCGI of the cell), and the NS-AoS information for network slice #1 received by the relay-MT from the AMF serving the relay-MT includes the cell identifiers of Cell#2 and Cell#3.

When the UE moves together with the relay device to a cell outside the NS-AoS of a specific slice (e.g., network slice #1), such as Cell#1, the relay-MT cannot initiate a PDU session establishment request for that network slice #1, or even if PDU session #1 associated with network slice #1 exists, the data plane of PDU session #1 will not be activated, and the already-established DRB corresponding to PDU session #1 will be released. That is, the relay-MT cannot use the DRB corresponding to PDU session #1 to provide backhaul service for the UE. However, for the UE camping on the relay device (e.g., the access network device part of the relay device (relay-gNB)), the serving cell is the cell of the relay device (e.g., the access network device part of the relay device (relay-gNB)), i.e., Cell#4, rather than the serving cell of the relay device (e.g., the terminal device part of the relay device (relay-MT)), i.e., Cell#1. At this point, the UE considers that it is still within the NS-AoS of network slice #1 and does not know that the backhaul DRB between the relay device (e.g., the terminal device part of the relay device (relay-MT)) and the donor base station has been released. This may lead to the UE's service requests failing or already-established services being interrupted.

This application provides a communication method. When the relay device moves to a cell outside the NS-AoS of a specific slice, the method addresses how to let the UE accessing the relay device know that the backhaul DRB established by the relay device (e.g., the terminal device part of the relay device (relay-MT)) for the UE has been released, or that the relay device (e.g., the terminal device part of the relay device (relay-MT)) cannot establish a backhaul DRB for the UE's service. This enables the UE to determine the subsequent correct UE behavior, thereby reducing the failure rate of the UE's requests for slice services and improving service continuity.

It should be understood that the communication method provided by the embodiments of this application may be applied in a relay system, e.g., the communications system shown in FIG. 3.

It should also be understood that the embodiments shown below do not particularly limit the specific structure of the entity performing the method provided in the embodiments of this application, as long as communication according to the method provided in the embodiments of this application can be performed by running a program that records the code of the method provided in the embodiments of this application. For example, the entity performing the method provided in the embodiments of this application may be a device or network element, or a functional module in a device or network element that is capable of invoking and executing programs.

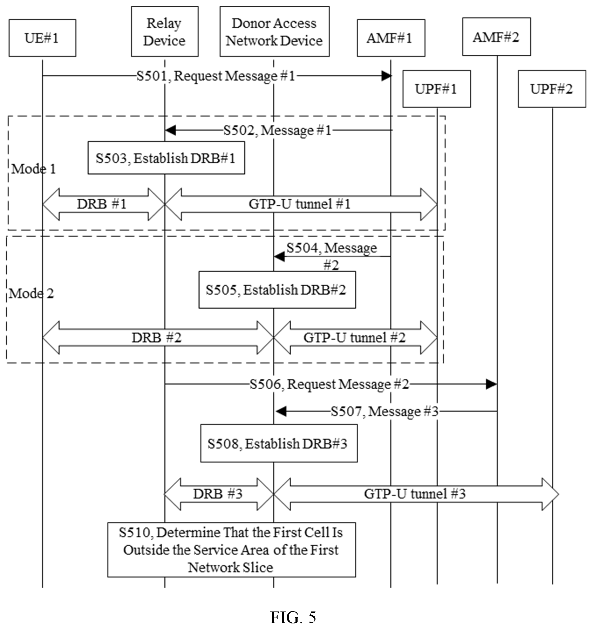

FIG. 5 is a schematic flowchart of a communication method provided in this application. The method comprises the following steps:
S501: A first terminal device sends request message #1 to a first core network device. Correspondingly, the first core network device receives request message #1 from the first terminal device.

The first core network device referred to in this embodiment may be the AMF described above. The name of the first core network device is not limited in this embodiment. Any device capable of implementing the functions of the first core network device in this embodiment falls within the protection scope of this application. For ease of description, the first core network device is referred to as AMF#1 in the following. The first terminal device in this embodiment may be any terminal device. For ease of description, the first terminal device is referred to as UE#1 in the following.

Specifically, request message #1 is used to request establishment of a second PDU session associated with a fourth network slice. By way of example, request message #1 may be an uplink NAS message containing a PDU session establishment request message.

As described above, in this embodiment, UE#1 can initiate request message #1 for establishing the second PDU session associated with the fourth network slice. Request message #1 is carried in a NAS message of UE#1 and sent to the AMF serving the terminal device (referred to as AMF#1). After receiving request message #1 in this embodiment, AMF#1 has the following two possible modes:
Mode 1: AMF#1 may instruct the relay device to establish DRB#1 corresponding to the second PDU session for UE#1.

In the case shown in Mode 1, the method flow shown in FIG. 5 may further comprise:
S502: AMF#1 sends message #1 to the relay device.

Specifically, message #1 is used to instruct the access network device part (e.g., relay-gNB) of the relay device to establish DRB#1 corresponding to the second PDU session for UE#1 (e.g., DRB#1 as shown in FIG. 5, where the endpoint of UE#1's RRC connection is at the relay device (e.g., the access network device part (relay-gNB) of the relay device), and the relay device (e.g., the access network device part (relay-gNB) of the relay device) generates NGAP messages related to UE#1, with the donor access network device transparently forwarding the NGAP messages of UE#1).

Optionally, AMF#1 instructs the relay device (e.g., the access network device part (relay-gNB) of the relay device) to establish DRB#1 corresponding to the second PDU session for UE#1 through an NGAP message (e.g., an initial context setup request (initial context setup request) message).

S503: The relay device establishes DRB#1.

In the case shown in Mode 1, the GTP-U tunnel corresponding to the second PDU session (e.g., GTP-U tunnel #1 as shown in FIG. 5) is established between the relay device (e.g., the access network device part (relay-gNB) of the relay device) and AMF#1.

Mode 2: AMF#1 may instruct the donor access network device to establish DRB#2 corresponding to the second PDU session for UE#1.

In the case shown in Mode 2, the method flow shown in FIG. 5 may further comprise:
S504: AMF#1 sends message #2 to the donor access network device.

Specifically, message #2 is used to instruct the donor access network device (donor-gNB) to establish DRB#2 corresponding to the second PDU session for UE#1 (e.g., DRB#2 as shown in FIG. 5, where the endpoint of UE#1's RRC connection is at the donor access network device, and the donor access network device generates NGAP messages related to the UE, with the relay device transparently forwarding the RRC messages of UE#1).

Optionally, AMF#1 instructs the donor access network device to establish DRB#2 corresponding to the second PDU session for UE#1 through an NGAP message (e.g., an initial context setup request (initial context setup request) message).

S505: The donor access network device establishes DRB#2.

In the case shown in Mode 2, the GTP-U tunnel corresponding to the second PDU session (e.g., GTP-U tunnel #2 as shown in FIG. 5) is established between the donor access network device and UPF#1 serving UE#1.

Further, the relay device may, based on the fourth network slice associated with UE#1's second PDU session, initiate through a NAS message a request to the second core network device (e.g., AMF#2) serving the relay device to establish the first PDU session associated with the first network slice, where the fourth network slice and the first network slice may be the same or different. The method flow shown in FIG. 5 further includes:
S506: The relay device sends request message #2 to AMF#2. Correspondingly, AMF#2 receives request message #2 from the relay device.

Specifically, request message #2 is used to request establishment of the first PDU session associated with the first network slice. By way of example, request message #2 may be an uplink NAS message containing a PDU session establishment request message.

S507: AMF#2 sends message #3 to the donor access network device.

Specifically, message #3 is used to instruct the donor access network device to establish DRB#3 corresponding to the first PDU session for the relay device (e.g., the terminal device part (relay-MT) of the relay device) (e.g., DRB#3 as shown in FIG. 5, where the endpoint of the relay device's RRC connection is at the donor access network device, and the donor access network device generates NGAP messages related to the relay device (e.g., the terminal device part (relay-MT) of the relay device)).

Optionally, AMF#2 may instruct the donor access network device to establish DRB#3 corresponding to the first PDU session for the relay device through an NGAP message (e.g., an initial context setup request (initial context setup request) message).

S508: The donor access network device establishes DRB#3.

The GTP-U tunnel corresponding to the first PDU session (e.g., GTP-U tunnel #3 as shown in FIG. 5) is established between the donor access network device and AMF#2. DRB#3 may be used for carrying data of a backhaul link, wherein the backhaul link is the backhaul link for transmitting data of the second PDU session of UE#1. Specifically, the backhaul link is used for carrying data between the relay device and the donor access network device.

As one possible implementation, if the relay device moves from Cell#2 to the first cell (e.g., Cell#1), i.e., the camping cell (or serving cell) of the relay device (e.g., the terminal device part (relay-MT) of the relay device) changes from Cell#2 to the first cell.

Optionally, Cell#1 and Cell#2 both belong to the same base station, i.e., the first cell and Cell#2 both belong to the donor access network device. In this case, for the relay device (e.g., the terminal device part (relay-MT) of the relay device), this is an intra-CU intra-station handover.

Optionally, Cell#1 and Cell#2 belong to different base stations, i.e., the first cell and Cell#2 do not belong to the same donor access network device. In this case, for the relay device (e.g., the terminal device part (relay-MT) of the relay device), this is an inter-CU inter-station handover. Compared to the intra-CU intra-station handover, there are additional XnAP-related handover messages, which will not be reiterated here.

As another possible implementation, the camping cell of the relay device is updated to the first cell.

This embodiment does not impose any limitation on the reason why the relay device is located in the first cell, i.e., the camping cell of the relay device is the first cell.

The method flow shown in FIG. 5 further includes:
S510: The relay device or the donor access network device determines that the first cell is outside the service area of the first network slice.

As described above, the first cell is the camping cell of the relay device, the first network slice is associated with the first PDU session, the DRB corresponding to the first PDU session (i.e., DRB#3 mentioned above) is used for carrying data of the backhaul link, the backhaul link is the backhaul link for transmitting data of the second PDU session, and UE#1 is the terminal device accessing the relay device.

By way of example, after the relay device or the donor access network device determines that the first cell is outside the service area of the first network slice, the subsequent process includes several cases shown in Possibility 1 to Possibility 8 below, which will be described one by one with reference to the accompanying drawings.

As one possible implementation, step S510 is performed by the donor access network device, i.e., the donor access network device determines that the first cell is outside the service area of the first network slice, including:
The donor access network device can learn that the first cell is outside the service area of the first network slice by determining that no resources are allocated for the first network slice in the camping cell of the relay device.

For example, the donor access network device determines that the first cell (e.g., the serving cell after handover) where the relay device is camping has no resources allocated for the first network slice associated with the first PDU session, and may reject the admission of the first PDU session, i.e., no RAN-side resources will be prepared for the first PDU session. In addition, the donor access network device may instruct AMF#2 via an NGAP message to notify SMF#2 serving the relay device to deactivate the first PDU session (e.g., the donor access network device notifies AMF#2 via an NGAP message, and AMF#2 further instructs SMF#2 to deactivate the first PDU session via a core network internal interface).

By way of example, the NGAP message may be a message related to PDU session modification, such as a PDU session resource notify (PDU session resource notify) (PDU session resource notify) message or a path switch request (path switch request) (path switch request) message.

Possibility 1: The donor access network device determines to deactivate UE#1's second PDU session.

Corresponding to Mode 1 above, DRB#1 is established by the relay device (e.g., the access network device part (relay-gNB) of the relay device). In the case of Possibility 1, the donor access network device may instruct the relay device (e.g., the terminal device part (relay-MT) of the relay device) to have the relay device (e.g., the access network device part (relay-gNB) of the relay device) release the resources prepared for UE#1's second PDU session (including releasing the corresponding DRB#1).

Corresponding to Mode 2 above, DRB#2 is established by the donor access network device. In the case of Possibility 1, the donor access network device may directly release the resources prepared for UE#1's second PDU session.

If the relay device (e.g., the access network device part (relay-gNB) of the relay device) or the donor access network device has not completed the release of resources prepared for UE#1's second PDU session (for example, if the donor access network device's instruction to the relay device (e.g., the access network device part (relay-gNB) of the relay device) to release the resources prepared for UE#1's second PDU session has not been executed, or if the donor access network device's direct release of the resources prepared for UE#1's second PDU session has not been executed), then in subsequent processes when AMF#1 executes deactivation of UE#1's second PDU session, it may also instruct the relay device (e.g., the access network device part (relay-gNB) of the relay device) or the donor access network device via second indication information to release the resources prepared for UE#1's second PDU session.

By way of example, the case of Possibility 1 involves the donor access network device sending an indication to deactivate the second PDU session.

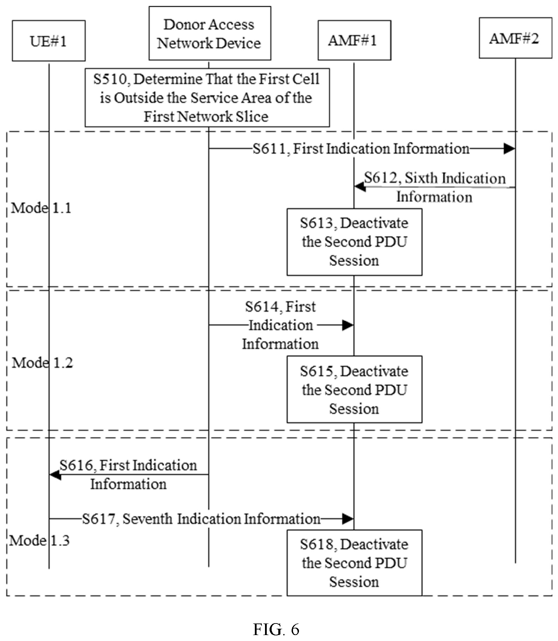

Optionally, the donor access network device's sending of the deactivation indication includes but is not limited to the following modes. For ease of understanding, the following description is given with reference to FIG. 6.

Mode 1.1: The donor access network device instructs AMF#1 via AMF#2 to deactivate UE#1's second PDU session.

In the case of Mode 1.1, the method flow shown in FIG. 6 includes:
S611: The donor access network device sends first indication information to AMF#2. Correspondingly, AMF#2 receives the first indication information from the donor access network device.

Specifically, the first indication information instructs AMF#2 to instruct AMF#1 to deactivate UE#1's second PDU session.

By way of example, the first indication information may be carried in existing NGAP signaling for indication to AMF#2, or may be carried in newly added NGAP signaling for indication to AMF#2; this application does not limit the foregoing. For example, the first indication information may be carried in information that instructs AMF#2 to deactivate the first PDU session. As another example, the first indication information may be information that instructs AMF#2 to deactivate the first PDU session. If the first indication information is information that instructs AMF#2 to deactivate the first PDU session, then after AMF#2 receives the first indication information in this embodiment, in response to the first indication information, AMF#2 not only executes the procedure of deactivating the first PDU session, but also executes the procedure of instructing AMF#1 to deactivate UE#1's second PDU session.

By way of example, in the case of Mode 1.1, the first indication information includes at least one of the following:
The identifier of AMF#1, the identifier of UE#1, or the identifier of the second PDU session.

Among these, the identifier of AMF#1 is used to notify AMF#2 that the AMF serving UE#1 is AMF#1, and the identifier of AMF#1 may be the globally unique AMF identifier (globally unique AMF identifier, GUAMI) of AMF#1; the identifier of UE#1 is used to notify AMF#1 on which UE to perform the operation, and the identifier of the terminal device may be the UE NGAP ID allocated to UE#1 by AMF#1; the identifier of the second PDU session is used to notify AMF#1 which PDU session of the UE to deactivate.

Optionally, corresponding to Mode 1 above, the first indication information may further provide the UE NGAP ID allocated to UE#1 by the relay device (e.g., the access network device part (relay-gNB) of the relay device).

Optionally, corresponding to Mode 2 above, the first indication information may further provide the UE NGAP ID allocated to UE#1 by the donor access network device.

It should be noted that the identifier of AMF#1, the identifier of UE#1, and the identifier of the second PDU session referred to in this application are only examples and do not constitute any limitation on the protection scope of this application. For example, any information that can be used to identify AMF#1 falls within the protection scope of this application; any information that can be used to identify UE#1 also falls within the protection scope; and any information that can be used to identify the second PDU session also falls within the protection scope. These will not be enumerated one by one here.

S612: AMF#2 sends sixth indication information to AMF#1. Correspondingly, AMF#1 receives the sixth indication information from AMF#2.

Specifically, based on the first indication information sent by the donor access network device, AMF#2 may send sixth indication information to AMF#1. The sixth indication information instructs AMF#1 to deactivate UE#1's second PDU session.

For example, AMF#2 determines, based on the identifier of AMF#1 carried in the first indication information sent by the donor access network device, that the AMF serving UE#1 is AMF#1, and may then send sixth indication information to AMF#1. The sixth indication information is used to instruct AMF#1 to deactivate UE#1's second PDU session.

By way of example, the sixth indication information includes the identifier of UE#1 and the identifier of the second PDU session received from the first indication information.

Optionally, corresponding to Mode 1 above, the sixth indication information may further provide the UE NGAP ID allocated to UE#1 by the relay device (e.g., the access network device part (relay-gNB) of the relay device).

Optionally, corresponding to Mode 2 above, the sixth indication information may further provide the UE NGAP ID allocated to UE#1 by the donor access network device.

S613: AMF#1 deactivates the second PDU session.

Specifically, in the case of Mode 1.1, after AMF#1 receives the sixth indication information, in response to the sixth indication information, AMF#1 deactivates UE#1's second PDU session. For example, AMF#1 determines, based on the identifier of UE#1 and the identifier of the second PDU session carried in the sixth indication information, to deactivate UE#1's second PDU session.

Mode 1.2: The donor access network device instructs AMF#1 to deactivate UE#1's second PDU session.

In the case of Mode 1.2, the method flow shown in FIG. 6 further includes:
S614: The donor access network device sends first indication information to AMF#1. Correspondingly, AMF#1 receives the first indication information from the donor access network device.

Specifically, after rejecting the admission of the relay device's first PDU session, the donor access network device instructs AMF#1 via the first indication information to deactivate UE#1's second PDU session.

By way of example, in the case of Mode 1.2, the first indication information includes the identifier of UE#1 and the identifier of the second PDU session.

Optionally, corresponding to Mode 1 above, the first indication information may further provide the UE NGAP ID allocated to UE#1 by the relay device (e.g., the access network device part (relay-gNB) of the relay device).

Optionally, corresponding to Mode 2 above, the first indication information may further provide the UE NGAP ID allocated to UE#1 by the donor access network device.

S615: AMF#1 deactivates the second PDU session.

Reference may be made to the description of step S613 in Mode 1.1 above, which will not be reiterated here.

Mode 1.3: The donor access network device instructs UE#1 to initiate deactivation of the second PDU session.

In the case of Mode 1.3, the method flow shown in FIG. 6 further includes:
S616: The donor access network device sends first indication information to UE#1. Correspondingly, UE#1 receives the first indication information from the donor access network device.

Specifically, after rejecting the admission of the relay device's first PDU session, the donor access network device instructs UE#1 via the first indication information to initiate deactivation of the second PDU session.

Optionally, corresponding to Mode 1 above, DRB#1 is established by the relay device (e.g., the access network device part (relay-gNB) of the relay device). The sending of first indication information from the donor access network device to UE#1 in step S616 may be: the donor access network device sends the first indication information to the relay device (e.g., the terminal device part (relay-MT) of the relay device), and the relay device (e.g., the access network device part (relay-gNB) of the relay device) then sends the first indication information to UE#1 via an RRC message.

Optionally, corresponding to Mode 2 above, DRB#2 is established by the donor access network device. The sending of first indication information from the donor access network device to UE#1 in step S616 may be: the donor access network device sends the first indication information directly to UE#1 via an RRC message.

S617: UE#1 sends seventh indication information to AMF#1. Correspondingly, AMF#1 receives the seventh indication information from UE#1.

Specifically, after receiving the first indication information described above, UE#1 may, in response to the first indication information, request AMF#1 via the seventh indication information to deactivate UE#1's second PDU session.

By way of example, the seventh indication information includes but is not limited to a PDU session release message or a PDU session modification message. It may be understood that the UE may request AMF#1 to deactivate UE#1's second PDU session through a PDU session management procedure (e.g., a PDU session release or modification procedure).

By way of example, the seventh indication information includes the identifier of the second PDU session.

S618: AMF#1 deactivates the second PDU session.

Reference may be made to the description of step S613 in Mode 1.1 above, which will not be reiterated here.

As another possible implementation, step S510 is performed by the relay device, i.e., the relay device determines that the first cell is outside the service area of the first network slice, including:
The relay device may determine that the first cell is outside the service area of the first network slice in one of the following ways:
The relay device determines, based on the identifier of the first cell and at least one cell identifier included in the first service area information, that the identifier of the first cell does not belong to any of the cell identifiers in the first service area information. The first service area information is information provided by the second core network device (AMF#2) serving the relay device to indicate the service area of the first network slice (i.e., the NS-AoS of the first network slice).

Or, the relay device perceives that the first PDU session has been deactivated and considers that the first cell is outside the service area of the first network slice.

Possibility 2: The relay device determines to deactivate UE#1's second PDU session.

Corresponding to Mode 1 above, DRB#1 is established by the relay device (e.g., the access network device part (relay-gNB) of the relay device). In the case of Possibility 2, the relay device (e.g., the access network device part (relay-gNB) of the relay device) may directly release the resources prepared for UE's PDU session #1.

Corresponding to Mode 2 above, DRB#2 is established by the donor access network device. In the case of Possibility 2, the relay device may instruct the donor access network device to release the resources prepared for UE#1's second PDU session.

If the relay device (e.g., the access network device part (relay-gNB) of the relay device) or the donor access network device has not completed the release of resources prepared for UE#1's second PDU session (for example, if the relay device's direct release of the resources prepared for UE#1's second PDU session has not been executed, or if the relay device's instruction to the donor access network device to release the resources prepared for UE#1's second PDU session has not been executed), then in subsequent processes when AMF#1 executes deactivation of UE#1's second PDU session, it may also instruct the relay device (e.g., the access network device part (relay-gNB) of the relay device) or the donor access network device via second indication information to release the resources prepared for UE#1's second PDU session.

By way of example, the case of Possibility 2 involves the relay device sending an indication to deactivate the second PDU session.

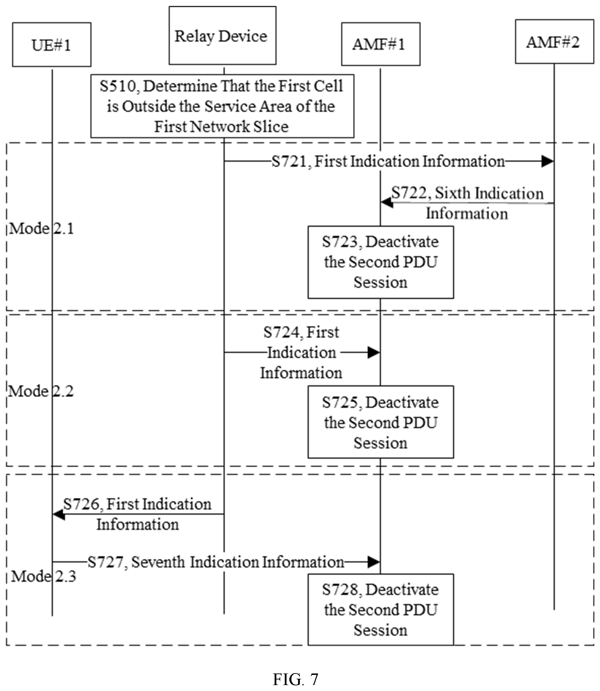

Optionally, the relay device's sending of the deactivation indication includes but is not limited to the following modes. For ease of understanding, the following description is given with reference to FIG. 7:
Mode 2.1: The relay device instructs AMF#1 via AMF#2 to deactivate UE#1's second PDU session.

In the case of Mode 2.1, the method flow shown in FIG. 7 further includes:
S721: The relay device sends first indication information to AMF#2. Correspondingly, AMF#2 receives the first indication information from the relay device.

Specifically, the first indication information instructs AMF#2 to instruct AMF#1 to deactivate UE#1's second PDU session.

By way of example, the first indication information may be carried in existing NGAP signaling for indication to AMF#2, or may be carried in newly added NGAP signaling for indication to AMF#2; this application does not limit the foregoing. For example, the first indication information may be carried in information that instructs AMF#2 to deactivate the first PDU session. As another example, the first indication information may be information that instructs AMF#2 to deactivate the first PDU session. If the first indication information is information that instructs AMF#2 to deactivate the first PDU session, then after AMF#2 receives the first indication information in this embodiment, in response to the first indication information, AMF#2 not only executes the procedure of deactivating the first PDU session, but also executes the procedure of instructing AMF#1 to deactivate UE#1's second PDU session.

By way of example, in the case of Mode 2.1, the first indication information includes at least one of the following:
The identifier of AMF#1, the identifier of UE#1, or the identifier of the second PDU session.

For the definitions of the identifier of AMF#1, the identifier of UE#1, and the identifier of the second PDU session in this embodiment, reference may be made to the descriptions of the identifier of AMF#1, the identifier of UE#1, and the identifier of the second PDU session in step S611 above, which will not be reiterated here.

Optionally, corresponding to Mode 1 above, the first indication information may further provide the UE NGAP ID allocated to UE#1 by the relay device (e.g., the access network device part (relay-gNB) of the relay device).

Optionally, corresponding to Mode 2 above, the first indication information may further provide the UE NGAP ID allocated to UE#1 by the donor access network device.

S722: AMF#2 sends sixth indication information to AMF#1. Correspondingly, AMF#1 receives the sixth indication information from AMF#2.

Reference may be made to the description of step S612 in Mode 1.1 above, which will not be reiterated here.

S723: AMF#1 deactivates the second PDU session.

Reference may be made to the description of step S613 in Mode 1.1 above, which will not be reiterated here.

Mode 2.2: The relay device instructs AMF#1 to deactivate UE#1's second PDU session.

In the case of Mode 2.2, the method flow shown in FIG. 7 further includes:
S724: The relay device sends first indication information to AMF#1. Correspondingly, AMF#1 receives the first indication information from the relay device.

Specifically, after the relay device determines that the current camping cell is outside the NS-AoS of the first network slice, the relay device (e.g., the access network device part (relay-gNB) of the relay device) instructs AMF#1 via the first indication information to deactivate UE's PDU session #1.

By way of example, in the case of Mode 2.2, the first indication information includes the identifier of UE#1 and the identifier of the second PDU session.

Optionally, corresponding to Mode 1 above, the first indication information may further provide the UE NGAP ID allocated to UE#1 by the relay device (e.g., the access network device part (relay-gNB) of the relay device).

Optionally, corresponding to Mode 2 above, the first indication information may further provide the UE NGAP ID allocated to UE#1 by the donor access network device.

Optionally, corresponding to Mode 1 above, DRB#1 is established by the relay device (e.g., the access network device part (relay-gNB) of the relay device). The sending of first indication information from the relay device (e.g., the terminal device part (relay-MT) of the relay device) to AMF#1 in step S724 may be: the first indication information is carried in an NGAP message and transparently forwarded to AMF#1 by the relay device (e.g., the access network device part (relay-gNB) of the relay device) through the donor access network device.

Optionally, corresponding to Mode 2 above, DRB#2 is established by the donor access network device. The sending of first indication information from the relay device (e.g., the terminal device part (relay-MT) of the relay device) to AMF#1 in step S724 may be: the donor access network device, after releasing the resources prepared for UE#1's second PDU session, instructs AMF#1 via an NGAP message, wherein the donor access network device may instruct AMF#1 via an NGAP message only after receiving the instruction from the relay device (e.g., the terminal device part (relay-MT) of the relay device).

S725: AMF#1 deactivates the second PDU session.

Reference may be made to the description of step S613 in Mode 1.1 above, which will not be reiterated here.

Mode 2.3: The relay device (e.g., the terminal device part (relay-MT) of the relay device) instructs UE#1 to initiate deactivation of the second PDU session.

In the case of Mode 2.3, the method flow shown in FIG. 7 further includes:
S726: The relay device sends first indication information to UE#1. Correspondingly, UE#1 receives the first indication information from the relay device.

Specifically, after the relay device determines that the current camping cell is outside the NS-AoS of the first network slice or determines that the first PDU session has been activated, the relay device instructs UE#1 via the first indication information to initiate deactivation of the second PDU session.

S727: UE#1 sends seventh indication information to AMF#1. Correspondingly, AMF#1 receives the seventh indication information from UE#1.

Reference may be made to the description of step S617 in Mode 1.3 above, which will not be reiterated here.

S728: AMF#1 deactivates the second PDU session.

Reference may be made to the description of step S613 in Mode 1.1 above, which will not be reiterated here.

It should be noted that in the above Mode 1.1 to Mode 2.3, all involve the first indication information. The receiver, sender, or content of the first indication information may differ in different modes. For the purpose of distinction, these may be referred to as first indication information #1, first indication information #2, etc. It should be understood that the message names in this application do not constitute any limitation on the solution.

In the solutions shown in Possibility 1 and Possibility 2 above, when the DRB corresponding to the first PDU session associated with the first network slice established by the relay device can no longer be used for carrying data of the backhaul link, it is possible to instruct the first core network device serving the first terminal device to deactivate the second PDU session, thereby avoiding service failure or interruption caused by the first terminal device continuing to perform service transmission based on the second PDU session.

In addition, as another implementation, when the DRB corresponding to the first PDU session associated with the first network slice established by the relay device can no longer be used for carrying data of the backhaul link, it is also possible to update the network slice associated with the first PDU session from the first network slice to a second network slice, wherein the second network slice has available resources in the first cell, so that the DRB corresponding to the first PDU session associated with the second network slice can continue to provide a backhaul link for the second PDU session of the first terminal device, thereby enabling the first terminal device to continue performing service transmission based on the second PDU session. Possibility 3 below describes this implementation.

Possibility 3: AMF#2 updates the network slice associated with the first PDU session to a network slice that has available resources in the first cell.

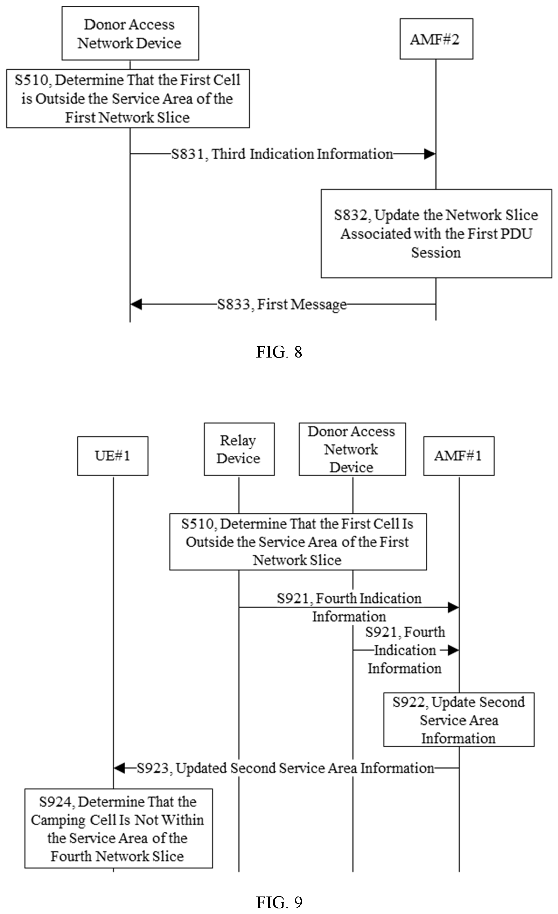

For ease of understanding, the following description introduces in detail how to update the network slice associated with the first PDU session in the case of Possibility 3 with reference to FIG. 8. In the case of Possibility 3, the method flow shown in FIG. 8 includes:
S831: The donor access network device sends third indication information to AMF#2. Correspondingly, AMF#2 receives the third indication information from the donor access network device.

The third indication information is used to instruct deactivation of the first protocol data unit (PDU) session.

S832: AMF#2 updates the network slice associated with the first PDU session.

Specifically, in the case of Possibility 3, after AMF#2 receives the third indication information from the donor access network device, AMF#2 does not deactivate the first PDU session; instead, it updates the network slice associated with the first PDU session, where the updated network slice has available resources in the first cell.

S833: AMF#2 sends a first message to the donor access network device. Correspondingly, the donor access network device receives the first message from AMF#2.

After AMF#2 updates the network slice associated with the first PDU session, it may indicate the updated network slice associated with the first PDU session to the donor access network device through a first message (e.g., an NGAP message).

For example, AMF#2 determines to update the network slice associated with the first PDU session from the first network slice to the second network slice, and indicates this to the donor access network device through a PDU session modification request. The updated first PDU session is associated with the second network slice. After the donor access network device receives the first message, it may modify the slice associated with the DRB corresponding to the first PDU session to the second network slice.

By way of example, AMF#2 may have triggered a network slice replacement (network slice replacement) procedure for the first network slice, and the second network slice can be regarded as the alternative network slice (alternative S-NSSAI) for the first network slice. Among these, alternative S-NSSAI refers to the slice used to replace an unavailable network slice to provide services for terminal devices when the network slice or network slice instance deployed at the core network encounters congestion or becomes unavailable. In this embodiment, a new condition for triggering the delivery of an alternative S-NSSAI is added, i.e., AMF#2 will not deactivate the already-established first PDU session of the relay device (e.g., the terminal device part (relay-MT) of the relay device) that is located outside the NS-AoS of the first network slice, but will instead trigger the network slice replacement procedure.

As another implementation, when the DRB corresponding to the first PDU session associated with the first network slice established by the relay device can no longer be used for carrying data of the backhaul link, it is also possible to select the DRB corresponding to another third PDU session associated with a third network slice that has resources configured in the first cell for carrying data of the backhaul link, thereby enabling the first terminal device to continue performing service transmission based on the second PDU session. Possibility 4 below describes this implementation.

Possibility 4: The donor access network device or relay device re-selects a DRB for backhaul from other already-established backhaul DRBs (corresponding to other PDU sessions) for UE#1's second PDU session.

If there are other backhaul DRBs already established between the donor access network device or the relay device, for example, a DRB corresponding to a third PDU session, where the third PDU session is associated with a third network slice, and the third network slice has available resources in the first cell, then the donor access network device or relay device may, upon determining that the RAN-side resources of the first PDU session have been released, use the DRB corresponding to the third PDU session as the backhaul link for transmitting data of the second PDU session.

Further, the donor access network device or relay device may store the association relationship between the DRB associated with the second PDU session and the backhaul DRB (i.e., the DRB corresponding to the third PDU session mentioned above), and/or the donor access network device or relay device may store the association relationship between the backhaul DRB and the GTP-U tunnel corresponding to the second PDU session.

As another implementation, the relay device may align the identifier of the camping cell provided by the relay device with the identifier of the current camping cell of the relay device, which may be understood as the camping cell of the terminal device accessing the relay device being an extension of the camping cell of the relay device. If the current camping cell of the relay device is not within the service area of a certain network slice, the terminal device accessing the relay device can likewise learn that the current camping cell is not within the service area of that network slice. Possibility 5 below describes this implementation.

Possibility 5: UE#1's camping cell is an extension of the relay device's camping cell, i.e., the cell identifier on the relay device is kept consistent with the camping cell of the relay device.

In the case of Possibility 5, the relay device sets the identifier of the camping cell provided by the relay device for UE#1 to the identifier of the first cell (i.e., the camping cell of the relay device (e.g., the terminal device part (relay-MT) of the relay device)).

Further, after the relay device has updated the cell identifier on the relay device, UE#1 can determine that the current camping cell is not within the service area of the fourth network slice. In this embodiment, the fourth network slice is the same as the first network slice.

It should be understood that, in the case where the terminal device determines that the current camping cell is not within the NS-AoS of the fourth network slice, subsequent behaviors of the terminal device may refer to the description of terminal device behavior defined in the existing protocols, and will not be reiterated here.

It should be noted that in the case of Possibility 5, step S510 above may be an optional step, i.e., the relay device may not need to determine whether the first cell is outside the service area of the first network slice. When the camping cell of the relay device changes, the relay device may set the identifier of the camping cell provided by the relay device for UE#1 to the identifier of the camping cell of the relay device.

As another implementation, in the case where the DRB corresponding to the first PDU session associated with the first network slice established by the relay device can no longer be used for carrying data of the backhaul link, the second service area information may also be updated so that the updated second service area information does not include the identifier of the second cell (i.e., the camping cell of the first terminal device), and the updated second service area information is sent to the first terminal device. The first terminal device can then determine, based on the updated second service area information, that the second cell is outside the service area of the fourth network slice. Therefore, when the camping cell of the first terminal device is the second cell, the second PDU session associated with the fourth network slice established by the first terminal device needs to be deactivated, thereby avoiding service failure or interruption caused by the first terminal device continuing to perform service transmission based on the second PDU session. Possibilities 6 and 7 below describe this implementation.

Possibility 6: The donor access network device or relay device instructs AMF#1 to update the NS-AoS of the fourth network slice for UE#1.

For ease of understanding, the following description introduces in detail how AMF#1 updates the NS-AoS of the fourth network slice for UE#1 in the case of Possibility 6 with reference to FIG. 9. In the case of Possibility 6, the method flow shown in FIG. 9 includes:
S921: The donor access network device or relay device sends fourth indication information to AMF#1. Correspondingly, AMF#1 receives the fourth indication information from the donor access network device or relay device.

Specifically, the fourth indication information is used to instruct AMF#1 to update the NS-AoS information of the fourth network slice for UE#1. The updated NS-AoS information should have the current camping cell of UE#1 (e.g., Cell#4) removed.

Optionally, if the fourth indication information is sent by the relay device, corresponding to Mode 1 above, DRB#1 is established by the relay device (e.g., the access network device part (relay-gNB) of the relay device). In that case, it may be transparently forwarded to AMF#1 by the donor access network device. Corresponding to Mode 2 above, DRB#2 is established by the donor access network device, so the relay device may first indicate this to the donor access network device, and then the donor access network device indicates it to AMF#1.

S922: AMF#1 updates the second service area information.

Specifically, AMF#1 updates the second service area information in response to the fourth indication information. The second service area information is the NS-AoS information of the fourth network slice provided by AMF#1. The updated second service area information does not include the identifier of the second cell (i.e., the current camping cell of UE#1). For example, the current camping cell of UE#1 (e.g., Cell#4) should be removed from the updated second service area information.

S923: AMF#1 sends the updated second service area information to UE#1. Correspondingly, UE#1 receives the updated second service area information from AMF#1.

S924: UE#1 determines that the current camping cell is not within the service area of the fourth network slice.

Specifically, in the case where the terminal device determines that the current camping cell is not within the NS-AoS of the fourth network slice, subsequent behaviors of the terminal device may refer to the description of terminal device behavior defined in the existing protocols, and will not be reiterated here.

Possibility 7: The donor access network device or relay device instructs UE#1 to initiate a registration update to obtain a new NS-AoS for the fourth network slice.

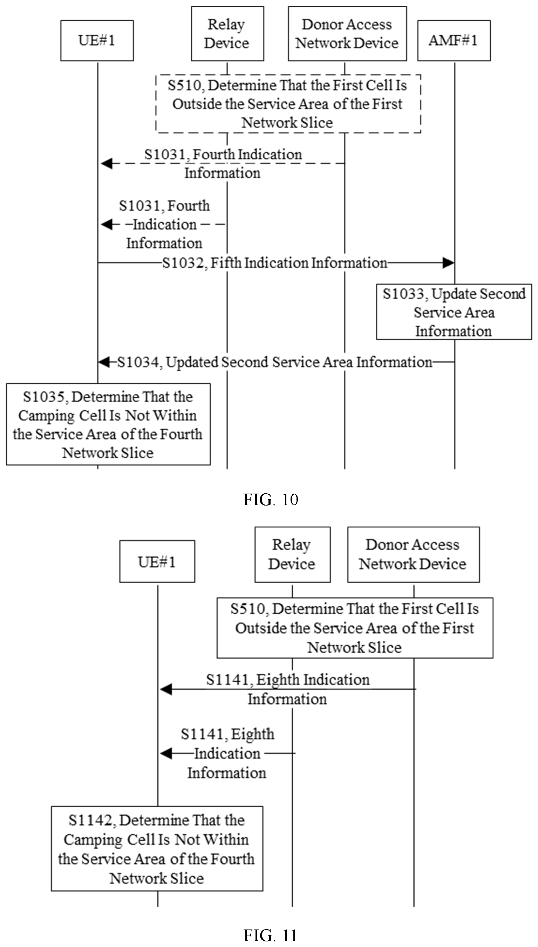

For ease of understanding, the following description introduces in detail how to obtain a new NS-AoS for the fourth network slice in the case of Possibility 7 with reference to FIG. 10. In the case of Possibility 7, the method flow shown in FIG. 10 includes:
S1031: The donor access network device or relay device sends fourth indication information to UE#1. Correspondingly, UE#1 receives the fourth indication information from the donor access network device or relay device.

Specifically, the fourth indication information is used to instruct the first core network device to update the second service area information. For example, the fourth indication information instructs UE#1 to initiate a registration update (e.g., initiating a registration update through a TAU procedure) to thereby instruct the first core network device to update the second service area information.

Optionally, if the fourth indication information is sent by the donor access network device, corresponding to Mode 1 above, DRB#1 is established by the relay device (e.g., the access network device part (relay-gNB) of the relay device). In that case, the donor access network device may first indicate this to the relay device (e.g., the terminal device part (relay-MT) of the relay device), and then the relay device (e.g., the access network device part (relay-gNB) of the relay device) indicates it to UE#1. Corresponding to Mode 2 above, DRB#2 is established by the donor access network device, so the relay device (e.g., the access network device part (relay-gNB) of the relay device) may transparently forward it to UE#1.

S1032: UE#1 sends fifth indication information to AMF#1.

The fifth indication information is used to instruct the first core network device to update the second service area information, which is information provided by AMF#1 to indicate the service area of the fourth network slice. For example, UE#1 initiates a registration update procedure to AMF#1 via a NAS message.

Optionally, the donor access network device or relay device may carry the identifier of the camping cell of the relay device (e.g., the terminal device part (relay-MT) of the relay device) in the NAS message, such as the NCGI of Cell#1.

Corresponding to Mode 1 above, DRB#1 is established by the relay device (e.g., the access network device part (relay-gNB) of the relay device). The identifier of the camping cell may be carried by the relay device (e.g., the terminal device part (relay-MT) of the relay device) directly in the UE's NAS message, or may be sent by the donor access network device, while transparently forwarding the NAS message to AMF#1 of UE#1, additionally carrying the identifier of the camping cell in an NGAP message.

Corresponding to Mode 2 above, DRB#2 is established by the donor access network device. The identifier of the camping cell may be indicated by the relay device (e.g., the terminal device part (relay-MT) of the relay device) to the donor access network device when transparently forwarding the NAS message of UE#1, and then sent together by the donor access network device to AMF#1 of UE#1 via an NGAP message; or may be indicated directly to AMF#1 of UE#1 via an NGAP message by the donor access network device when transparently forwarding the NAS message of UE#1.

S1033: AMF#1 updates the second service area information.

Specifically, AMF#1, based on the identifier of the first cell and the service area of the first network slice, can determine that the first cell is outside the service area of the first network slice, and thereby determines to update the second service area information. The second service area information is the NS-AoS information of the fourth network slice provided by AMF#1. The updated second service area information does not include the identifier of the second cell (i.e., the current camping cell of UE#1). For example, the current camping cell of UE#1 (e.g., Cell#4) should be removed from the updated second service area information.

S1034: AMF#1 sends the updated second service area information to UE#1. Correspondingly, UE#1 receives the updated second service area information from AMF#1. Reference may be made to the description of step S923 in Possibility 6 above, which will not be reiterated here.

S1035: UE#1 determines that the current camping cell is not within the service area of the fourth network slice.

Specifically, in the case where the terminal device determines that the current camping cell is not within the NS-AoS of the fourth network slice, subsequent behaviors of the terminal device may refer to the description of terminal device behavior defined in the existing protocols, and will not be reiterated here.

It should be noted that in the case of Possibility 7, steps S510 and S1031 above may be optional steps, i.e., UE#1 may proactively initiate the update of the second service area information on its own.

As another implementation, in the case where the DRB corresponding to the first PDU session associated with the first network slice established by the relay device can no longer be used for carrying data of the backhaul link, UE#1 may also be instructed that there are no resources for the backhaul link related to UE#1's data, thereby avoiding service failure or interruption caused by the first terminal device continuing to perform service transmission based on the second PDU session. Possibility 8 below describes this implementation.

Possibility 8: The donor access network device or relay device informs UE#1 that there are no resources for the backhaul link provided by the relay device for UE#1.

For ease of understanding, the following description with reference to FIG. 11 introduces in detail the case of Possibility 8. The method flow shown in FIG. 11 includes:
S1141: The donor access network device or relay device sends eighth indication information to UE#1. Correspondingly, UE#1 receives the eighth indication information from the donor access network device or relay device.

The eighth indication information is used to indicate that the serving cell (e.g., the second cell) provided by the relay device for UE#1 does not belong to the service area of the fourth network slice. For example, the eighth indication information may indicate that the DRB providing the backhaul link for UE#1 associated with the fourth network slice or the NSAG associated with the fourth network slice has no resources, thereby indicating that the second cell does not belong to the service area of the fourth network slice.

The eighth indication information may be sent via an RRC message or a broadcast message.

Corresponding to Mode 1 above, DRB#1 is established by the relay device (e.g., the access network device part (relay-gNB) of the relay device). The eighth indication information may be carried by the relay device (e.g., the terminal device part (relay-MT) of the relay device) directly in the UE's NAS message, or may be sent by the donor access network device, while transparently forwarding the NAS message to AMF#1 of UE#1, additionally carrying the identifier of the camping cell in an NGAP message.

Corresponding to Mode 2 above, DRB#2 is established by the donor access network device. The eighth indication information may be indicated by the relay device (e.g., the terminal device part (relay-MT) of the relay device) to the donor access network device when transparently forwarding the NAS message of UE#1, and then sent together by the donor access network device to AMF#1 of UE#1 via an NGAP message; or may be indicated directly to AMF#1 of UE#1 via an NGAP message by the donor access network device when transparently forwarding the NAS message of UE#1.

S1142: UE#1 determines that the current camping cell is not within the service area of the fourth network slice.

Specifically, in the case where the terminal device determines that the current camping cell is not within the NS-AoS of the fourth network slice, subsequent behaviors of the terminal device may refer to the description of terminal device behavior defined in the existing protocols, and will not be reiterated here.

It should be noted that in the case of Possibility 8 in the L3 Relay scenario, UE#1 may regard cells where there are no resources for the backhaul link as being outside the NS-AoS of the slice associated with the data transmitted on that backhaul (even if UE#1's camping cell has resources allocated for that slice, e.g., Cell#4 has resources allocated for the fourth network slice, but the DRB providing the backhaul for UE#1 has no resources allocated in the first cell). Alternatively, UE#1 may also remove the camping cell of UE#1 (i.e., Cell#4) from the NS-AoS stored for the fourth network slice (or for the slice associated with the NSAG in the indication information, or for that NSAG), and then UE#1 determines that the current camping cell is not within the service area of the fourth network slice.

It should be understood that the numerical order of the foregoing steps does not imply an execution order; the execution order of each step should be determined by its function and inherent logic, and should not impose any limitation on the implementation process of the embodiments of this application.

It should also be understood that, in the various embodiments of this application, unless otherwise stated or unless there is a logical conflict, terms and/or descriptions between different embodiments are consistent and may be mutually referenced, and technical features of different embodiments may be combined based on their inherent logical relationships to form new embodiments.

It should also be understood that in some of the above embodiments, the description has mainly been given by way of example using devices in the existing network architecture (e.g., donor access network device, relay device, first core network device, second core network device, or first terminal device). It should be understood that the embodiments of this application do not limit the specific form of the devices. For example, devices capable of implementing the same functions in the future are also applicable to the embodiments of this application.

It should be understood that the methods and operations implemented by devices (e.g., the donor access network device, relay device, first core network device, second core network device, or first terminal device) in the various method embodiments above may also be implemented by components (e.g., chips or circuits) of the devices.

The communication method provided by the embodiments of this application has been described in detail above with reference to FIGS. 5 to 11. The above communication method has been introduced mainly from the perspective of interaction between the various protocol layers of the terminal device. It should be understood that, in order to implement the above functions, the terminal device includes hardware structures and/or software modules corresponding to each function.

Those skilled in the art should recognize that the units and algorithm steps described in the examples in connection with the embodiments disclosed herein can be implemented in hardware or a combination of hardware and computer software. Whether a particular function is performed in hardware or by hardware driven by computer software depends on the specific application and design constraints of the technical solution. Skilled artisans may implement the described functionality using different methods for each particular application, but such implementation should not be considered beyond the scope of this application.

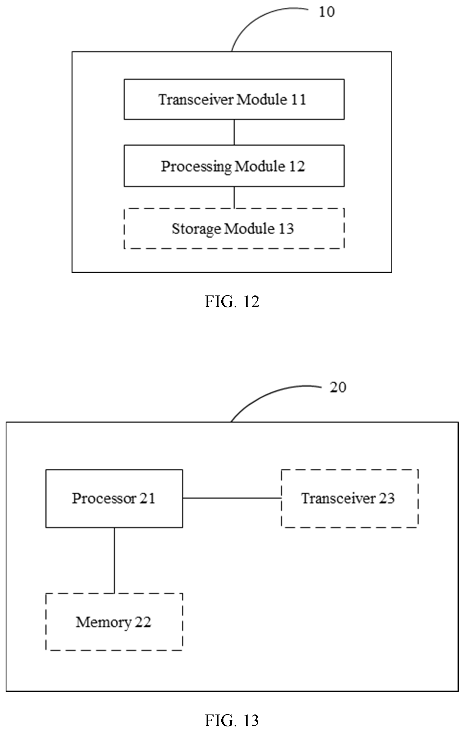

The communication apparatus provided by this application is described in detail below with reference to FIGS. 12 to 14. It should be understood that the description of the apparatus embodiments corresponds to the description of the method embodiments. Therefore, for content not described in detail, reference may be made to the method embodiments above. For the sake of brevity, some content will not be reiterated.

The embodiments of this application may divide the transmit end device or receive end device into functional modules according to the method examples above. For example, each functional module may be divided corresponding to each function, or two or more functions may be integrated into one processing module. The integrated module may be implemented in the form of hardware or in the form of a software functional module. It should be noted that the division of modules in the embodiments of this application is illustrative and is only a logical functional division. There may be other division methods in actual implementation. The following description uses the example of dividing each functional module corresponding to each function.

FIG. 12 is a schematic block diagram of a communication apparatus 10 provided in embodiments of this application. The apparatus 10 includes a transceiver module 11 and a processing module 12. The transceiver module 11 may implement the corresponding communication functions, and the processing module 12 is used for data processing; that is, the transceiver module 11 is used for performing receiving and sending related operations, and the processing module 12 is used for performing operations other than receiving and sending. The transceiver module 11 may also be referred to as a communication interface or a communication unit.

Optionally, the apparatus 10 may further include a storage module 13. The storage module 13 may be used for storing instructions and/or data. The processing module 12 may read instructions and/or data stored in the storage module to enable the apparatus to perform the actions of the devices in the foregoing method embodiments.

In one design, the apparatus 10 may correspond to the donor access network device or relay device in the method embodiments above, or a component (e.g., a chip) of the donor access network device or relay device.

The apparatus 10 may implement the steps or procedures performed by the donor access network device or relay device in the method embodiments above, wherein the transceiver module 11 may be used for performing receiving and sending related operations of the donor access network device or relay device in the method embodiments above, and the processing module 12 may be used for performing processing-related operations of the donor access network device or relay device in the method embodiments above.

In one possible implementation, the processing module 12 is configured to determine that a first cell is outside a service area of a first network slice, wherein the first cell is a camping cell of a relay device, the first network slice is associated with a first protocol data unit (PDU) session established by the relay device, a data radio bearer (DRB) corresponding to the first PDU session is used for carrying data of a backhaul link, the backhaul link is a backhaul link for transmitting data of a second PDU session of a first terminal device, and the first terminal device is a terminal device that accesses the relay device. The transceiver module 11 is configured to send first indication information, wherein the first indication information is used to instruct a first core network device to deactivate the second PDU session, and the first core network device serves the first terminal device.

In another possible implementation, the processing module 12 is configured to determine that a first cell is outside a service area of a first network slice, wherein the first cell is a camping cell of a relay device, the first network slice is associated with a first protocol data unit (PDU) session established by the relay device, a data radio bearer (DRB) corresponding to the first PDU session is used for carrying data of a backhaul link, the backhaul link is a backhaul link for transmitting data of a second PDU session of a first terminal device, and the first terminal device is a terminal device that accesses the relay device. The processing module 12 is further configured to determine that a DRB corresponding to a third PDU session is used for carrying data of the backhaul link, wherein the third PDU session is associated with a third network slice, and the third network slice has available resources in the first cell.

In yet another possible implementation, the processing module 12 is configured to determine that a first cell is outside a service area of a first network slice, wherein the first cell is a camping cell of a relay device, the first network slice is associated with a first protocol data unit (PDU) session established by the relay device, a data radio bearer (DRB) corresponding to the first PDU session is used for carrying data of a backhaul link, the backhaul link is a backhaul link for transmitting data of the second PDU session, and the first terminal device is a terminal device that accesses the relay device. The transceiver module 11 is configured to send fourth indication information, wherein the fourth indication information is used to instruct a first core network device to update second service area information, the first core network device serves the first terminal device, and the second service area information is information provided by the first core network device to indicate a service area of a fourth network slice.

In yet another possible implementation, the processing module 12 is configured to set the identifier of the camping cell provided by the relay device for the first terminal device to the identifier of the first cell, wherein the first cell is the camping cell of the relay device, and the first terminal device is a terminal device that accesses the relay device.

When the apparatus 10 is configured to perform the method in FIG. 5, the transceiver module 11 may be used for performing the steps of transceiving information in the method, such as steps S502, S504, S506, and S507; and the processing module 12 may be used for performing the processing steps in the method, such as steps S503, S505, S508, and S510.

When the apparatus 10 is configured to perform the method in FIG. 6, the transceiver module 11 may be used for performing the steps of transceiving information in the method, such as steps S611, S614, and S616; and the processing module 12 may be used for performing the processing steps in the method, such as step S510.

When the apparatus 10 is configured to perform the method in FIG. 7, the transceiver module 11 may be used for performing the steps of transceiving information in the method, such as steps S721, S724, and S726; and the processing module 12 may be used for performing the processing steps in the method, such as step S510.

When the apparatus 10 is configured to perform the method in FIG. 8, the transceiver module 11 may be used for performing the steps of transceiving information in the method, such as steps S831 and S833; and the processing module 12 may be used for performing the processing steps in the method, such as step S510.

When the apparatus 10 is configured to perform the method in FIG. 9, the transceiver module 11 may be used for performing the steps of transceiving information in the method, such as step S921; and the processing module 12 may be used for performing the processing steps in the method, such as step S510.

When the apparatus 10 is configured to perform the method in FIG. 10, the transceiver module 11 may be used for performing the steps of transceiving information in the method, such as step S1031; and the processing module 12 may be used for performing the processing steps in the method, such as step S510.

When the apparatus 10 is configured to perform the method in FIG. 11, the transceiver module 11 may be used for performing the steps of transceiving information in the method, such as step S1141; and the processing module 12 may be used for performing the processing steps in the method, such as step S510.

It should be understood that the specific processes in which the units perform the corresponding steps above have been described in detail in the method embodiments above and will not be reiterated here for the sake of brevity.

In another design, the apparatus 10 may correspond to the first core network device in the method embodiments above, or a component (e.g., a chip) of the first core network device.

The apparatus 10 may implement the steps or procedures performed by the first core network device in the method embodiments above, wherein the transceiver module 11 may be used for performing receiving and sending related operations of the first core network device in the method embodiments above, and the processing module 12 may be used for performing processing-related operations of the first core network device in the method embodiments above.

In one possible implementation, the transceiver module 11 is configured to receive indication information for deactivating a second protocol data unit (PDU) session of a first terminal device. The processing module 12 is configured to deactivate the second PDU session, wherein a data radio bearer (DRB) corresponding to a first PDU session established by a relay device is used for carrying data of a backhaul link, the backhaul link is a backhaul link for transmitting data of the second PDU session, the first PDU session is associated with a first network slice, and a camping cell of the relay device is outside a service area of the first network slice.

In another possible implementation, the transceiver module 11 is configured to receive indication information for updating second service area information, wherein the second service area information is information provided by the first core network device serving the first terminal device to indicate a service area of a fourth network slice. The processing module 12 is configured to update the second service area information in response to the indication information, wherein the updated second service area information does not include the identifier of a second cell, and the second cell is the camping cell provided by the relay device for the first terminal device. The transceiver module 11 is further configured to send the updated second service area information to the first terminal device.

When the apparatus 10 is configured to perform the method in FIG. 5, the transceiver module 11 may be used for performing the steps of transceiving information in the method, such as steps S01, S502, and S504; and the processing module 12 may be used for performing the processing steps.

When the apparatus 10 is configured to perform the method in FIG. 6, the transceiver module 11 may be used for performing the steps of transceiving information in the method, such as steps S612, S614, and S617; and the processing module 12 may be used for performing the processing steps S613, S615, and S618.

When the apparatus 10 is configured to perform the method in FIG. 7, the transceiver module 11 may be used for performing the steps of transceiving information in the method, such as steps S722, S724, and S727; and the processing module 12 may be used for performing the processing steps S723, S725, and S728.

When the apparatus 10 is configured to perform the method in FIG. 9, the transceiver module 11 may be used for performing the steps of transceiving information in the method, such as steps S921 and S923; and the processing module 12 may be used for performing the processing steps S922.

When the apparatus 10 is configured to perform the method in FIG. 10, the transceiver module 11 may be used for performing the steps of transceiving information in the method, such as steps S1032 and S1034; and the processing module 12 may be used for performing the processing steps S1033.

It should be understood that the specific processes in which the units perform the corresponding steps above have been described in detail in the method embodiments above and will not be reiterated here for the sake of brevity.

In yet another design, the apparatus 10 may correspond to the second core network device in the method embodiments above, or a component (e.g., a chip) of the second core network device.

The apparatus 10 may implement the steps or procedures performed by the second core network device in the method embodiments above, wherein the transceiver module 11 may be used for performing receiving and sending related operations of the second core network device in the method embodiments above, and the processing module 12 may be used for performing processing-related operations of the second core network device in the method embodiments above.

In one possible implementation, the transceiver module 11 is configured to receive first indication information, wherein the first indication information includes an identifier of a first core network device, an identifier of a first terminal device, and an identifier of a second protocol data unit (PDU) session. The transceiver module 11 is further configured to send sixth indication information in response to the first indication information, wherein the sixth indication information is used to instruct the first core network device to deactivate the second PDU session, wherein a data radio bearer (DRB) corresponding to a first PDU session established by a relay device is used for carrying data of a backhaul link, the backhaul link is a backhaul link for transmitting data of the second PDU session, the first PDU session is associated with a first network slice, and a camping cell of the relay device is outside a service area of the first network slice.

In another possible implementation, the transceiver module 11 is configured to receive third indication information, wherein the third indication information is used to instruct deactivation of a first protocol data unit (PDU) session, a DRB corresponding to the first PDU session is used for carrying data of a backhaul link, the backhaul link is a backhaul link for transmitting data of a second PDU session of a first terminal device, and the first terminal device is a terminal device that accesses the relay device. The processing module 12 is configured to, in response to the third indication information, update the network slice associated with the first PDU session from a first network slice to a second network slice, wherein the second network slice has available resources in a first cell, the first cell is the camping cell of the relay device, and the first cell is outside a service area of the first network slice; and send a first message, wherein the first message is used to indicate the second network slice associated with the first PDU session.

When the apparatus 10 is configured to perform the method in FIG. 5, the transceiver module 11 may be used for performing the steps of transceiving information in the method, such as steps S506 and S507; and the processing module 12 may be used for performing the processing steps.

When the apparatus 10 is configured to perform the method in FIG. 6, the transceiver module 11 may be used for performing the steps of transceiving information in the method, such as steps S611 and S612; and the processing module 12 may be used for performing the processing steps.

When the apparatus 10 is configured to perform the method in FIG. 7, the transceiver module 11 may be used for performing the steps of transceiving information in the method, such as steps S721 and S722; and the processing module 12 may be used for performing the processing steps.

When the apparatus 10 is configured to perform the method in FIG. 8, the transceiver module 11 may be used for performing the steps of transceiving information in the method, such as steps S831 and S833; and the processing module 12 may be used for performing the processing steps, such as step S832.

It should be understood that the specific processes in which the units perform the corresponding steps above have been described in detail in the method embodiments above and will not be reiterated here for the sake of brevity.

In yet another design, the apparatus 10 may correspond to the second core network device in the method embodiments above, or a component (e.g., a chip) of the second core network device.

The apparatus 10 may implement the steps or procedures performed by the first terminal device in the method embodiments above, wherein the transceiver module 11 may be used for performing receiving and sending related operations of the first terminal device in the method embodiments above, and the processing module 12 may be used for performing processing-related operations of the first terminal device in the method embodiments above.

In one possible implementation, the transceiver module 11 is configured to receive first indication information, wherein the first indication information includes an identifier of a second protocol data unit (PDU) session. The transceiver module 11 is further configured to send seventh indication information to a first core network device in response to the first indication information, wherein the seventh indication information includes the identifier of the second PDU session, and the seventh indication information is used to instruct deactivation of the second PDU session, wherein a data radio bearer (DRB) corresponding to a first PDU session established by a relay device is used for carrying data of a backhaul link, the backhaul link is a backhaul link for transmitting data of the second PDU session, the first PDU session is associated with a first network slice, and the camping cell of the relay device is outside the service area of the first network slice.

In another possible implementation, the transceiver module 11 is configured to send fifth indication information, wherein the fifth indication information is used to instruct a first core network device to update second service area information, the second service area information is information provided by the first core network device to indicate a service area of a fourth network slice, and the first core network device is a core network device serving the first terminal device. The transceiver module 11 is further configured to receive updated second service area information, wherein the updated second service area information does not include the identifier of a second cell, and the second cell is the camping cell provided by the relay device for the first terminal device.

In yet another possible implementation, the transceiver module 11 is configured to receive eighth indication information, wherein the eighth indication information is used to indicate that the second cell does not belong to the service area of a fourth network slice. The processing module 12 is configured to, in response to the eighth indication information, determine that the second cell is not regarded as a cell within the service area of the fourth network slice, or the processing module 12 is configured to, in response to the eighth indication information, remove the second cell from the service area of the fourth network slice, wherein the second cell is the camping cell provided by the relay device, the service area of the fourth network slice is at least one cell indicated by second service area information provided by the first core network device serving the first terminal device, the at least one cell includes the second cell, and the first terminal device is a terminal device that accesses the relay device.

When the apparatus 10 is configured to perform the method in FIG. 5, the transceiver module 11 may be used for performing the steps of transceiving information in the method, such as step S501; and the processing module 12 may be used for performing the processing steps.

When the apparatus 10 is configured to perform the method in FIG. 6, the transceiver module 11 may be used for performing the steps of transceiving information in the method, such as steps S616 and S617; and the processing module 12 may be used for performing the processing steps.

When the apparatus 10 is configured to perform the method in FIG. 7, the transceiver module 11 may be used for performing the steps of transceiving information in the method, such as steps S726 and S727; and the processing module 12 may be used for performing the processing steps.

When the apparatus 10 is configured to perform the method in FIG. 9, the transceiver module 11 may be used for performing the steps of transceiving information in the method, such as step S923; and the processing module 12 may be used for performing the processing steps, such as step S924.

When the apparatus 10 is configured to perform the method in FIG. 10, the transceiver module 11 may be used for performing the steps of transceiving information in the method, such as steps S1031, S1032, and S1034; and the processing module 12 may be used for performing the processing steps, such as step S1035.

When the apparatus 10 is configured to perform the method in FIG. 11, the transceiver module 11 may be used for performing the steps of transceiving information in the method, such as step S1141; and the processing module 12 may be used for performing the processing steps, such as step S1142.

It should be understood that the specific processes in which the units perform the corresponding steps above have been described in detail in the method embodiments above and will not be reiterated here for the sake of brevity.

It should also be understood that the apparatus 10 here is embodied in the form of functional modules. The term "module" here may refer to an application specific integrated circuit (application specific integrated circuit, ASIC), an electronic circuit, a processor (e.g., a shared processor, a dedicated processor, or a group processor) and memory for executing one or more software or firmware programs, a combined logic circuit, and/or other suitable components that support the described functionality. In an optional example, those skilled in the art can understand that the apparatus 10 may specifically be the mobility management network element in the above embodiments, and may be used for performing the respective flows and/or steps corresponding to the mobility management network element in the various method embodiments above; or the apparatus 10 may specifically be the terminal device in the above embodiments, and may be used for performing the respective flows and/or steps corresponding to the terminal device in the various method embodiments above. For the sake of avoiding repetition, this will not be reiterated here.

The apparatus 10 of each of the foregoing solutions has the capability to implement the corresponding steps performed by the devices (e.g., donor access network device, relay device, first core network device, second core network device, or first terminal device) in the above methods. This capability may be implemented by hardware or by hardware executing corresponding software. The hardware or software includes one or more modules corresponding to the above functions; for example, the transceiver module may be replaced by a transceiver (e.g., the sending unit in the transceiver module may be replaced by a transmitter, and the receiving unit in the transceiver module may be replaced by a receiver), and other units such as the processing module may be replaced by a processor to perform respectively the transceiving operations and related processing operations in the various method embodiments.

In addition, the transceiver module 11 may also be a transceiving circuit (e.g., which may include a receiving circuit and a sending circuit), and the processing module may be a processing circuit.

FIG. 13 is a schematic diagram of another communication apparatus 20 provided in embodiments of this application. The apparatus 20 includes a processor 21. The processor 21 is configured to execute a computer program or instructions stored in a memory 22, or to read data/signaling stored in the memory 22, to perform the methods in the foregoing method embodiments. Optionally, the processor 21 may be one or more.

Optionally, as shown in FIG. 13, the apparatus 20 further includes a memory 22 for storing computer programs or instructions and/or data. The memory 22 may be integrated with the processor 21 or may be separately disposed. Optionally, the memory 22 may be one or more.

Optionally, as shown in FIG. 13, the apparatus 20 further includes a transceiver 23 for receiving and/or sending signals. For example, the processor 21 is configured to control the transceiver 23 to receive and/or send signals.

As one option, the apparatus 20 is configured to implement the operations performed by the donor access network device in the various method embodiments above.

As another option, the apparatus 20 is configured to implement the operations performed by the relay device in the various method embodiments above.

As yet another option, the apparatus 20 is configured to implement the operations performed by the first core network device in the various method embodiments above.

As yet another option, the apparatus 20 is configured to implement the operations performed by the second core network device in the various method embodiments above.

As yet another option, the apparatus 20 is configured to implement the operations performed by the first terminal device in the various method embodiments above.

It should be understood that the processor referred to in the embodiments of this application may be a central processing unit (central processing unit, CPU), or may be other general-purpose processors, digital signal processors (digital signal processor, DSP), application specific integrated circuits (application specific integrated circuit, ASIC), field programmable gate arrays (field programmable gate array, FPGA), or other programmable logic devices, discrete gate or transistor logic devices, discrete hardware components, etc. A general-purpose processor may be a microprocessor or the processor may be any conventional processor, etc.

It should also be understood that the memory referred to in the embodiments of this application may be volatile memory and/or non-volatile memory. Non-volatile memory may be read-only memory (read-only memory, ROM), programmable ROM (programmable ROM, PROM), erasable PROM (erasable PROM, EPROM), electrically EPROM (electrically EPROM, EEPROM), or flash memory. Volatile memory may be random access memory (random access memory, RAM). For example, RAM may be used as an external cache. By way of example and not limitation, RAM includes the following various forms: static RAM (static RAM, SRAM), dynamic RAM (dynamic RAM, DRAM), synchronous DRAM (synchronous DRAM, SDRAM), double data rate SDRAM (double data rate SDRAM, DDR SDRAM), enhanced SDRAM (enhanced SDRAM, ESDRAM), synchlink DRAM (synchlink DRAM, SLDRAM), and direct rambus RAM (direct rambus RAM, DR RAM).

It should be noted that when the processor is a general-purpose processor, DSP, ASIC, FPGA, or other programmable logic device, discrete gate or transistor logic device, or discrete hardware component, the memory (storage module) may be integrated in the processor.

It should also be noted that the memory described herein is intended to include, but is not limited to, these and any other suitable types of memory.

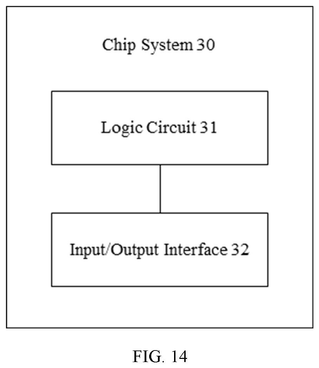

FIG. 14 is a schematic diagram of a chip system 30 provided in embodiments of this application. The chip system 30 (which may also be referred to as a processing system) includes a logic circuit 31 and an input/output interface 32.

The logic circuit 31 may be a processing circuit in the chip system 30. The logic circuit 31 may be coupled to a storage unit, calling instructions from the storage unit, so that the chip system 30 can implement the methods and functions of the various embodiments of this application. The input/output interface 32 may be an input/output circuit in the chip system 30, outputting information processed by the chip system 30 externally, or inputting data or signaling information to be processed into the chip system 30 for processing.

As one option, the chip system 30 is configured to implement the operations performed by the donor access network device, relay device, first core network device, second core network device, or first terminal device in the various method embodiments above.

For example, the logic circuit 31 is configured to implement the processing-related operations performed by the donor access network device, relay device, first core network device, second core network device, or first terminal device in the method embodiments above; and the input/output interface 32 is configured to implement the sending and/or receiving related operations performed by the donor access network device, relay device, first core network device, second core network device, or first terminal device in the method embodiments above.

The embodiments of this application further provide a computer-readable storage medium storing computer instructions for implementing the method performed by the donor access network device, relay device, first core network device, second core network device, or first terminal device in the various method embodiments above.

For example, when the computer program is executed by a computer, the computer can implement the method performed by the donor access network device, relay device, first core network device, second core network device, or first terminal device in the various method embodiments above.

The embodiments of this application further provide a computer program product containing instructions that, when executed by a computer, implement the method performed by the donor access network device, relay device, first core network device, second core network device, or first terminal device in the various method embodiments above.

The embodiments of this application further provide a communications system, comprising the aforementioned donor access network device, relay device, first core network device, and second core network device. Optionally, the communications system further includes the aforementioned first terminal device.

The explanations and beneficial effects of the relevant content in any of the apparatuses provided above may be referred to the corresponding method embodiments provided above, which will not be reiterated here.

In the several embodiments provided in this application, it should be understood that the disclosed apparatuses and methods may be implemented in other ways. For example, the apparatus embodiments described above are merely illustrative. For example, the division of units is only a logical functional division, and there may be other division methods in actual implementation, e.g., multiple units or components may be combined or may be integrated into another system, or some features may be omitted or not performed. In addition, the mutual coupling or direct coupling or communication connections shown or discussed may be through some interfaces, and indirect coupling or communication connections of devices or units may be in electrical, mechanical, or other forms.

Those skilled in the art can appreciate that the units and algorithm steps of the examples described in connection with the embodiments disclosed herein can be implemented in electronic hardware, or in a combination of computer software and electronic hardware. Whether these functions are performed in hardware or software depends on the specific application and design constraints of the technical solution. Skilled artisans may implement the described functionality using different methods for each particular application, but such implementation should not be considered beyond the scope of this application.

Those skilled in the art can clearly understand that, for convenience and brevity of description, the specific operating processes of the systems, devices, and units described above may refer to the corresponding processes in the foregoing method embodiments, and will not be reiterated here.

In the several embodiments provided in this application, it should be understood that the disclosed systems, devices, and methods may be implemented in other ways. For example, the apparatus embodiments described above are merely illustrative. For example, the division of units is only a logical functional division, and there may be other division methods in actual implementation, e.g., multiple units or components may be combined or may be integrated into another system, or some features may be omitted or not performed. In addition, the mutual coupling or direct coupling or communication connections shown or discussed may be through some interfaces, and indirect coupling or communication connections of devices or units may be in electrical, mechanical, or other forms.

Units described as separate components may or may not be physically separate. Components shown as units may or may not be physical units, i.e., they may be located in one place or may be distributed over multiple network units. Some or all of the units may be selected according to actual needs to achieve the purpose of the solution of this embodiment.

In addition, functional units in the various embodiments of this application may be integrated into one processing unit, or each unit may exist physically separately, or two or more units may be integrated into one unit.

If the functions are implemented in the form of software functional units and sold or used as independent products, they may be stored in a computer-readable storage medium. Based on such understanding, the technical solution of this application, or the part thereof that contributes to the prior art, or part of the technical solution, may be embodied in the form of a software product. The computer software product is stored in a storage medium, and includes several instructions to cause a computer device (which may be a personal computer, a server, or a network device, etc.) to perform all or part of the steps of the methods described in the various embodiments of this application. The aforementioned storage media include: USB flash drives, mobile hard disks, read-only memories (ROMs), random access memories (RAMs), magnetic discs, optical discs, and other various media that can store program code.

The foregoing descriptions are only specific implementations of this application, but the protection scope of this application is not limited thereto. Any modifications or substitutions that a person skilled in the art can easily think of within the technical scope disclosed in this application should be covered within the protection scope of this application. Therefore, the protection scope of this application shall be subject to the protection scope of the claims.

## Claims

1. A communication method, comprising:
determining that a first cell is outside a service area of a first network slice, wherein the first cell is a camping cell of a relay device, the first network slice is associated with a first protocol data unit (PDU) session established by the relay device, a data radio bearer (DRB) corresponding to the first PDU session is configured to carry data of a backhaul link, the backhaul link is a backhaul link for transmitting data of a second PDU session of a first terminal device, and the first terminal device is a terminal device that accesses the relay device; and
sending first indication information, wherein the first indication information is configured to instruct a first core network device to deactivate the second PDU session, and the first core network device serves the first terminal device.

2. The method according to claim 1, wherein the determining that the first cell is outside the service area of the first network slice comprises:
determining that the first cell does not include resources allocated for the first network slice; or
determining, based on an identifier of the first cell and identifiers of at least one cell included in first service area information, that the identifier of the first cell does not belong to any of the identifiers of the at least one cell, wherein the first service area information is information provided by a second core network device serving the relay device to indicate the service area of the first network slice; or
determining that the first PDU session has been deactivated.

3. The method according to claim 1 or 2, wherein the sending the first indication information comprises:
sending the first indication information to a second core network device, wherein the first indication information includes an identifier of the first core network device, an identifier of the first terminal device, and an identifier of the second PDU session, and the first indication information is configured to instruct the second core network device to instruct the first core network device to deactivate the second PDU session,
wherein the second core network device serves the relay device.

4. The method according to claim 1 or 2, wherein the sending the first indication information comprises:
sending the first indication information to the first core network device, wherein the first indication information includes an identifier of the first terminal device and an identifier of the second PDU session.

5. The method according to claim 1 or 2, wherein the sending the first indication information comprises:
sending the first indication information to the first terminal device, wherein the first indication information includes an identifier of the second PDU session, and the first indication information is configured to instruct the first terminal device to initiate deactivation of the second PDU session with the first core network device.

6. The method according to any one of claims 1 to 5, further comprising:
releasing resources configured for the second PDU session.

7. The method according to claim 6, further comprising, before the releasing resources configured for the second PDU session:
receiving second indication information, wherein the second indication information is configured to instruct releasing of the resources configured for the second PDU session.

8. A communication method, comprising:
receiving indication information for deactivating a second protocol data unit (PDU) session of a first terminal device; and
deactivating the second PDU session,
wherein a data radio bearer (DRB) corresponding to a first PDU session established by a relay device is configured to carry data of a backhaul link, the backhaul link is a backhaul link for transmitting data of the second PDU session, the first PDU session is associated with a first network slice, and a camping cell of the relay device is outside a service area of the first network slice.

9. The method according to claim 8, wherein the receiving indication information for deactivating the second PDU session of the first terminal device comprises:
receiving the indication information from at least one of:
the relay device, a donor access network device, a second core network device, or the first terminal device,
wherein the second core network device serves the relay device, and the indication information includes an identifier of the first terminal device and an identifier of the second PDU session.

10. The method according to claim 8 or 9, further comprising:
sending second indication information, wherein the second indication information is configured to instruct releasing of resources configured for the second PDU session.

11. A communication method, comprising:
receiving third indication information, wherein the third indication information is configured to instruct deactivation of a first protocol data unit (PDU) session, a data radio bearer (DRB) corresponding to the first PDU session is configured to carry data of a backhaul link, the backhaul link is a backhaul link for transmitting data of a second PDU session of a first terminal device, and the first terminal device is a terminal device that accesses a relay device;
updating, in response to the third indication information, a network slice associated with the first PDU session from a first network slice to a second network slice, wherein the second network slice has available resources in a first cell, the first cell is a camping cell of the relay device, and the first cell is outside a service area of the first network slice; and
sending a first message, wherein the first message is configured to indicate the second network slice associated with the first PDU session.

12. A communication method, comprising:
determining that a first cell is outside a service area of a first network slice, wherein the first cell is a camping cell of a relay device, the first network slice is associated with a first protocol data unit (PDU) session established by the relay device, a data radio bearer (DRB) corresponding to the first PDU session is configured to carry data of a backhaul link, the backhaul link is a backhaul link for transmitting data of a second PDU session of a first terminal device, and the first terminal device is a terminal device that accesses the relay device; and
determining that a DRB corresponding to a third PDU session is configured to carry data of the backhaul link,
wherein the third PDU session is associated with a third network slice, and the third network slice has available resources in the first cell.

13. The method according to claim 12, wherein the determining that the first cell is outside the service area of the first network slice comprises:
determining that the first cell does not include resources allocated for the first network slice; or
determining, based on an identifier of the first cell and identifiers of at least one cell included in first service area information, that the identifier of the first cell does not belong to any of the identifiers of the at least one cell, wherein the first service area information is information provided by a second core network device serving the relay device to indicate the service area of the first network slice; or
determining that the first PDU session has been deactivated.

14. A communication method, comprising:
receiving indication information for updating second service area information, wherein the second service area information is information provided by a first core network device serving a first terminal device to indicate a service area of a fourth network slice;
updating the second service area information in response to the indication information, wherein updated second service area information does not include an identifier of a second cell, and the second cell is a camping cell provided by a relay device for the first terminal device; and
sending the updated second service area information to the first terminal device.

15. The method according to claim 14, wherein the receiving indication information for updating the second service area information comprises:
receiving the indication information from at least one of:
the relay device, a donor access network device, or the first terminal device.

16. A communication method, comprising:
determining that a first cell is outside a service area of a first network slice, wherein the first cell is a camping cell of a relay device, the first network slice is associated with a first protocol data unit (PDU) session established by the relay device, a data radio bearer (DRB) corresponding to the first PDU session is configured to carry data of a backhaul link, the backhaul link is a backhaul link for transmitting data of a second PDU session of a first terminal device, and the first terminal device is a terminal device that accesses the relay device; and
sending fourth indication information, wherein the fourth indication information is configured to instruct a first core network device to update second service area information, the first core network device serves the first terminal device, and the second service area information is information provided by the first core network device to indicate a service area of a fourth network slice.

17. The method according to claim 16, wherein the determining that the first cell is outside the service area of the first network slice comprises:
determining that the first cell does not include resources allocated for the first network slice; or
determining, based on an identifier of the first cell and identifiers of at least one cell included in first service area information, that the identifier of the first cell does not belong to any of the identifiers of the at least one cell, wherein the first service area information is information provided by a second core network device serving the relay device to indicate the service area of the first network slice; or
determining that the first PDU session has been deactivated.

18. The method according to claim 16 or 17, wherein the sending the fourth indication information comprises:
sending the fourth indication information to the first core network device and/or the first terminal device.

19. A communication method, comprising:
sending fifth indication information, wherein the fifth indication information is configured to instruct a first core network device to update second service area information, the second service area information is information provided by the first core network device to indicate a service area of a fourth network slice, and the first core network device is a core network device serving a first terminal device; and
receiving updated second service area information, wherein the updated second service area information does not include an identifier of a second cell, and the second cell is a camping cell provided by a relay device for the first terminal device.

20. The method according to claim 19, further comprising, before the sending the fifth indication information:
receiving fourth indication information from the relay device and/or a donor access network device, wherein the fourth indication information is configured to instruct the first core network device to update the second service area information.

21. A communication apparatus, comprising a processor and a memory, the processor and the memory being coupled, the memory being configured to store a computer program, wherein when the processor executes the computer program, the communication apparatus is caused to perform the method according to any one of claims 1 to 20.

22. A computer-readable storage medium storing computer instructions, wherein when the computer instructions are executed on a communication apparatus, the communication apparatus is caused to perform the method according to any one of claims 1 to 20.

23. A computer program product comprising computer instructions, wherein when the computer instructions are executed on a communication apparatus, the communication apparatus is caused to perform the method according to any one of claims 1 to 20.

24. A chip, comprising a processor and a communication interface, wherein the processor reads instructions through the communication interface and executes the instructions, so that when the chip is installed in a communication apparatus, the communication apparatus performs the method according to any one of claims 1 to 20.
